# EUROPÄISCHE PATENTSCHRIFT

(11) **EP 0 802 218 B1**
(45) Veröffentlichungstag und Bekanntmachung des Hinweises auf die Patenterteilung: **18.05.2005**
(21) Anmeldenummer: 97104687.5
(22) Anmeldetag: 19.03.1997
(51) Int. Cl.: C08J 7/04, C09D 183/14, C08G 77/58

(54) **Verwendung eines Verbundsystems mit einer Aromabarriere- oder einer Riechstoffbarriereschicht**
Use of a composite with an aroma or a flavours barrier layer
Utilisation d'un système composite avec une couche barrière d'arôme ou de parfum

(30) Priorität: 17.04.1996 DE 19615192
(43) Veröffentlichungstag der Anmeldung: 22.10.1997
(73) Patentinhaber: Fraunhofer-Gesellschaft zur Förderung der angewandten Forschung e.V., 80686 München (DE)
(72) Erfinder: Amberg-Schwab, Sabine, Dr., 97250 Erlabrunn (DE); Hoffmann, Manfred, Dipl.-Chem., 97074 Würzburg (DE)
(74) Vertreter: Pfenning, Meinig & Partner

(56) Entgegenhaltungen:
- EP-A- 0 392 115
- DE-A- 3 407 087
- DE-A- 4 303 570
- DE-C- 3 925 901
- PATENT ABSTRACTS OF JAPAN vol. 095, no. 004, 31.Mai 1995 & JP 07 003206 A (NIPPON SHOKUBAI CO LTD), 6.Januar 1995,

## Beschreibung

Die Erfindung betrifft die Verwendung von Verbundsystemen, die aus einem Tragermaterial und einer Aromabarriereschicht oder einer Riechstoffbarriereschicht bestehen. Derartige Verbundsysteme können beispielsweise im Verpackungsbereich (z.B. Folien, Platten, Form- und Hohlkorper) aber auch für technische Anwendungen (z.B. Membranen, Schutzschichten für Sensoren) eingesetzt werden.

Polymere sind im Gegensatz zu Metallen oder Glas für Gase und für viele niedermolekulare Substanzen durchlässig. Es gibt keinen Kunststoff, der gegenüber Gas- oder Dampfmolekülen eine absolute Schranke darstellt. Dies ist auf die strukturellen Eigenschaften der Kunststoffe, wie z.B. der allgemeinen Porosität, der intermolekularen Zwischenräume und der molekularen Beweglichkeit, zurückzuführen. Bestimmte molekulare Strukturen sind für gute Barriereeigenschaften in Polymeren verantwortlich. Sehr oft führt allerdings eine Struktur, die eine gute Gasbarriere bedingt, zu schlechten Wasserdampfbarriereeigenschaften. Dieser Effekt kann in der Polarität eines Polymers begründet sein. Sehr polare Polymere, wie z.B. Polyvinylalkohol, sind ausgezeichnete Gas- und Aromabarrieren, aber sehr schlechte Wasserdampf-barrieren. In Folge dessen leidet ihre Eigenschaft als Gas- oder Aromabarriere bei Einwirkung von Feuchtigkeit. Nicht-polare Polymere, wie z.B. PE, haben ausgezeichnete Wasserdampf-, aber schlechte Gas- oder Aromabarriereeigenschaften. Für viele Barrierepolymere sind deshalb hohe Materialstärken erforderlich, um die gewünschten Barriereeigenschaften zu erreichen.

Die Permeation von Verbindungen durch Polymere ist in vielen Fällen unerwünscht. So z.B. bei polymeren Bauteilen, aus denen geruchsintensive und oft auch gesundheitlich bedenkliche Weichmacher diffundieren, wie etwa PVC, oder auch bei Verpackungsmaterialien. Polymere mit einer sehr geringen Permeation von Aromastoffen, sogenannte Barrierekunststoffe, spielen insbesondere auf dem Gebiet der Lebensmittelverpackung und der Verpackung von pharmazeutischen oder chemischen Produkten eine sehr wichtige Rolle. Sie werden eingesetzt, wenn Füllgüter wahrend der garantierten Mindesthaltbarkeitsdauer entweder vor externen Einflüssen oder gegen der Verlust der Inhaltsstoffe (z.B. Aromen) ausreichend geschützt werden müssen. Den komplexen Anforderungen an die Verpackungsmaterialien können neben Metall- und Glasverpackungen häufig nur Kombinationen verschiedener Kunststoffe bzw. Kunststoffolien mit aufgedampften, dünnen anorganischen Schichten genügen. Solche Folien zeigen noch meßbare Durchlässigkeiten gegenüber den verschiedensten Gasen, gestatten aber geringe Material- und Herstellungskosten, sowie ein geringes Gewicht der Verpackung. (Stehle, G.: Lebensmittel verpacken. Milchwirtschaftlicher Fachverlag Remagen, 1989; Boysen, M.: Barrierekunststoffe für Verpackungen im Vergleich, Kunststoffe 77 (1987) 5, S. 522-525; Krug, T.G.: Transparent Barriers for Food Packaging, Proc. of the 33rd Annual Technical Conference, Society of Vakuum Coaters, Washington, (1990), S. 163; Langowski, H.-C., Utz, H.: Dünne anorganische Schichten für Barrierepackstoffe, ZFL 43 (1992) Nr. 9, S. 520-526; Franz, R.: Verpakkungsmaterialien und Good Manufacturing Practice, Süßwaren 4 (1989), S. 132)

Durch vakuumtechnisches Bedampfen von Folien mit dünnen anorganischen Schichten (PVD/CVD-Verfahren) können die Wasserdampf- bzw. die Sauerstoffpermeabilitäten von geeigneten Folien verbessert werden. Die Vakuumbedampfung hat allerdings die im folgenden aufgeführten Nachteile:
- bis jetzt nur anwendbar für PET, OPP oder PA;
- eine Coronavorbehandlung der Substrate ist erforderlich;
- sie ist nicht anwendbar für PP und PE und viele anderen Polymermaterialien;
- für Biopolymere werden die erwünschten Ergebnisse nicht erzielt;
- hohe Anforderung an die Oberflächenqualität der zu bedampfenden Polymere;
- das Bedampfungsverfahren ist bis jetzt auf Flachfolien beschränkt;
- hohe Empfindlichkeit der aufgetragenen Schichten;
- hohe Anlagenkosten.
(Bichler, C., Drittler, R., Langowski, H.-C., Starnecker, A., Utz, H., Biologisch abbaubare Verpackungsmaterialien - Die Lösung des Müllproblems? BioEngineering 6, (1993) 9. Hartwig, E.K., High Vacuum RollCoating, Web Processing and Converting Technology and Equipment, Sata, D., Van Nostrand R., New York, 1984. Chahroudi, D., Glassy Barriers from Electron Web Beam Coaters, Proc. of the 33rd Annual Technical Conference, Society of Vacuum coaters, Washington, 1990, S. 212. Schiller, S., Neumann, M., Hötzsch, G., Capabilities of Electron Beam Evaporation for the Deposition of Compounds, Proc. of the 4th Int. Conf. on Vacuum Web Coating, Reno, S. 138)

Bei Verpackungsmaterialien wird immer mehr der Kompromiß zwischen den ökonomischen Vorteilen der Kunststoffe einerseits und der realisierbaren Haltbarkeitsdauer andererseits, die von der Art des Füllgutes abhängt, gesucht. Durch die Verpackungsverordnung vom 12.06.1991 und die daraus resultierende Forderung nach Verpackungsvermeidung, Verpackungsminderung, Wiederverwendbarkeit oder stofflicher Verwertbarkeit sind nun insbesondere Verbundmaterialien in den Blickpunkt der Kritik geraten. Obwohl bei der Entwicklung von Verbundmaterialien die Verringerung des Materialeinsatzes der ursprüngliche Ansatz gewesen ist, sind diese Materialien bezüglich der Wiederverwertbarkeit oder der stofflichen Verwertbarkeit den Glas- oder Metallverpackungen unterlegen.

Aus der DE 4305856 C1 ist ein Verfahren zur Herstellung von im Vakuum auf Verpackungsfolien aufgedampften SiO_{X}-Barriereschichten (Permeationssperrschichten) bekannt, das dadurch gekennzeichnet ist, daß die Verdampfung mit einem Aufdampfgut durchgeführt wird, das Silicium und eine Sauerstoffverbindung von Silicium und Bor oder eine Borverbindung enthält, wobei der Anteil an Bor mindestens 1 Mol-% des gesamten Siliciumgehaltes beträgt. Diese Barriereschichten zeigen zwar eine verminderte Schrumpfung und damit eine verminderte Rißbildung, auch lassen sich mit diesem Verfahren die Barriereeigenschaften von Polymeren erheblich verbessern, doch können die Permeationsraten mit konventioneller Meßtechnik immer noch erfaßt werden und bleiben damit für viele Anwendungen immer noch zu hoch. Darüber hinaus weisen Polymere aus nachwachsenden Rohstoffen auch nach der Beschichtung im Vergleich zu beschichteten Standardpolymeren, wie beispielsweise Polyethylen oder Polypropylen, um ein Vielfaches höhere Permeationsraten auf. Da die aufgedampften Schichten sehr empfindlich gegenüber mechanischer Beanspruchung sind, ist es zumeist erforderlich, die beschichteten Substrate beispielsweise mit einer Folie zu kaschieren. Außerdem bedingen vakuumtechnische Bedampfungsverfahren hohe Kosten.

SiOₓ Barriereschichten werden weiterhin in DE 3925901C, EP-A-0392115, DE 4303570A, DE 3407087, JP 07003206A und US 5434007 beschrieben.

Aufgabe der vorliegenden Erfindung ist es nun. Trägermaterialien mit einer Aromabarriereschicht bzw. einer Riechstoffbarriereschicht zu den in Anspruch 1 genannten Verwendungen bereit zu stellen. Aus Gründen der Einfachheit wird künftig nur noch von Aromastoffen oder Aromen gesprochen, gemeint sind aber stets Aromastoffe und Riechstoffe.

Diese Aromabarriereschicht soll auf den unterschiedlichsten organischen Trägermaterialien (Papier, Pappe, organische Polymere etc.) sehr gut haften, und die mit der Aromabarriereschicht versehenen Trägermaterialien sollen z.B. auch im Verpakkungsbereich einsetzbar sein. Die Aromabarriereschichten sollen auch unter Feuchteeinfluß sehr gute Barriere- und Haftungseigenschaften aufweisen, und es sollen nicht nur einfache Formen des Trägermaterials, wie z.B. Folien, mit einer Aromabarriereschicht versehen werden, sondern auch kompliziert geformte Teile. Ferner sollen die mit einer Aromabarriereschicht versehenen Trägermaterialien über eine mechanisch robuste Oberfläche verfügen. Außerdem ist es wünschenswert, wenn die Barriereschichten nicht nur gegenüber Aromastoffen wirksam sind sondern auch gegenüber Wasserdampf und Sauerstoff.

Ferner ist es Aufgabe der vorliegenden Erfindung, ein Verfahren bereit zu stellen, mit dem die unterschiedlichsten organischen Trägermaterialien mit einer Aromabarriereschicht versehen werden können. Dieses Verfahren soll einfach, kostengunstig und universell durchfuhrbar sein, und es sollen nur geringe Initialkosten für Anlagen notwendig werden. Die Aromabarriereschicht soll nach üblichen Methoden (Sprüh-, Schleuder-, Walz- oder Rakelverfahren) aufgetragen werden können. Das erfindungsgemäße Verfahren soll unproblematisch in rohstofflicher und werkstofflicher Verarbeitung und energetischer Nutzung sein.

Gelöst wird diese Aufgabe durch Verbundsysteme, deren Träger organisches Material aufweist, und die über eine Aromabarriereschicht aus einem organisch modifizierten Kieselsäure(hetero)polykondensat verfügen, das gegebenenfalls weitere Zusatzstoffe enthält.

In bevorzugten Ausführungsformen der erfindungsgemäßen Verbundsysteme ist das organisch modofizierte Kieselsäure(hetero)polykondensat erhalten worden durch hydrolytische Kondensation einer oder mehrerer hydrolytisch kondensierbarer Verbindungen des Siliciums und gegebenenfalls anderer Elemente aus der Gruppe B, Al, P, Sn, Pb, der Übergangsmetalle, der Lanthaniden und der Actiniden, und/oder von den oben genannten Verbindungen abgeleiteten Vorkondensaten, gegebenenfalls in Anwesenheit eines Katalysators und/oder eines Lösungsmittels durch Einwirken von Wasser oder Feuchtigkeit, wobei 10 bis 100 Mol-%, auf der Basis monomerer Verbindungen, der hydrolytisch kondensierboren Verbindungen Silane der allgemeinen Formel I sind,

Si Xₐ R₄₋ₐ (I)

in der die Reste und Indices gleich oder verschieden sind und folgende Bedeutung haben:
- R =: gegebenenfalls substituiertes Alkyl, Alkenyl, Aryl, Alkylaryl oder Arylalkyl mit 1 bis 50 Kohlenstoff-Atomen, wobei diese Reste durch Sauerstoff- oder Schwefel-Atome, durch Urethan-, Ester-, Carbonyl-, Amid- oder Amino-Gruppen unterbrochen sein können;
- X =: Wasserstoff, Halogen, Hydroxy, Alkoxy, Acyloxy, Alkylcarbonyl, Alkoxycarbonyl oder NR'₂, mit R' = Wasserstoff, Alkyl oder Aryl;
- a =: 1, 2 oder 3.

Die Silane der Formel I sind über die Reste X hydrolysierbar und über die Reste R polymerisierbar und/oder polyaddierbar und/oder polykondensierbar. Über die hydrolysierbaren Gruppen wird ein anorganisches Netzwerk mit Si-O-Si-Einheiten aufgebaut und über die Reste R ein organisches Netzwerk.

Die Alkyl-Reste sind z.B. geradkettige, verzweigte oder cyclische Reste mit 1 bis 50, insbesondere mit 1 bis 20 Kohlenstoff-Atomen und vorzugsweise niedere Alkyl-Reste mit 1 bis 6, besonders bevorzugt mit 1 bis 4 Kohlenstoff-Atomen. Spezielle Beispiele sind Methyl, Ethyl, n-Propyl, i-Propyl, n-Butyl, i-Butyl, s-Butyl, t-Butyl, n-Pentyl, n-Hexyl, Cyclohexyl, 2-Ethylhexyl, Dodecyl und Octadecyl.

Die Alkenyl-Reste sind z.B. geradkettige, verzweigte oder cyclische Reste mit 2 bis 50, bevorzugt mit 2 bis 20 Kohlenstoff-Atomen und vorzugsweise niedere Alkenyl-Reste mit 2 bis 6 Kohlenstoff-Atomen, wie z.B. Vinyl, Allyl und 2-Butenyl.

Bevorzugte Aryl-Reste sind Phenyl, Biphenyl und Naphthyl. Die Alkoxy-, Acyloxy-, Alkylamino-, Dialkylamino-, Alkylcarbonyl-, Alkoxycarbonyl-, Arylalkyl-, Alkylaryl-, Alkylen- und Alkylenarylen-Reste leiten sich vorzugsweise von den oben genannten Alkyl- und Aryl-Resten ab. Spezielle Beispiele sind Methoxy, Ethoxy, n- und i-Propoxy, n-, i-, s- und t-Butoxy, Monomethylamino, Monoethylamino, Dimethylamino, Diethylamino, N-Ethylanilino, Acetyloxy, Propionyloxy, Methylcarbonyl, Ethylcarbonyl, Methoxycarbonyl, Ethoxycarbonyl, Benzyl, 2-Phenylethyl und Tolyl.

Die genannten Reste können gegebenenfalls einen oder mehrere Substituenten tragen, z.B. Halogen, Alkyl, Hydroxyalkyl, Alkoxy, Aryl, Aryloxy, Alkylcarbonyl, Alkoxycarbonyl, Furfuryl, Tetrahydrofurfuryl, Amino, Monoalkylamino, Dialkylamino, Trialkylammonium, Amido, Hydroxy, Formyl, Carboxy, Mercapto, Cyano, Isocyanato, Nitro, Epoxy, SO₃H oder PO₄H₂.

Unter den Halogenen sind Fluor, Chlor und Brom und insbesondere Chlor bevorzugt.

Für a ≥ 2 bzw. 4-a ≥ 2 können die Reste X und R jeweils die selbe oder eine unterschiedliche Bedeutung haben.

Bevorzugt ist es, wenn mindestens eines der eingesetzten Silane mindestens einen Rest R aufweist, der einen geradkettigen oder verzweigten organischen Rest mit mindestens einer C=C-Doppelbindung und/oder mit mindestens einer Epoxidgruppe darstellt. Die C=C-Doppelbindungen können z.B. in Vinyl-, Allyl-, Acryl-, und/oder Methacrylgruppen vorhanden sein. In diesem Fall weist mindestens einer der Reste R 2 bis 50, vorzugsweise 6 bis 30 Kohlenstoffatome auf, und ohne Einschränkung der Allgemeinheit sind konkrete Beispiele für derartige Reste: 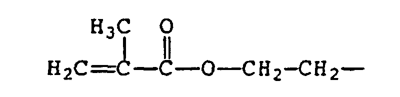 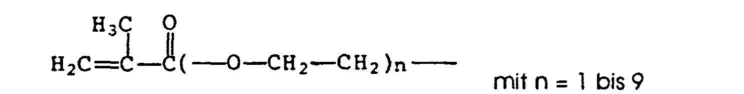 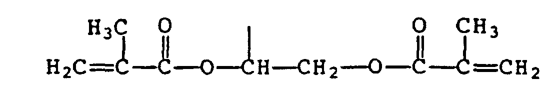 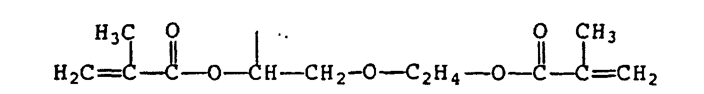 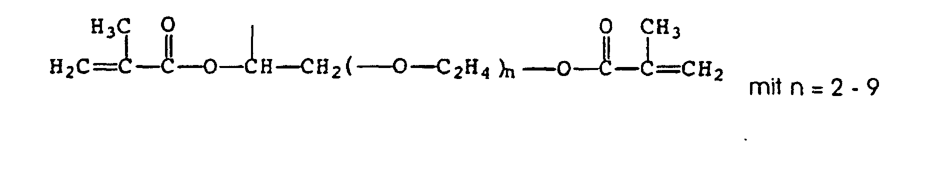 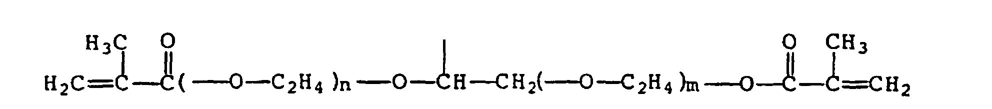 mit m = 1 - 6 und n = 1 - 6 und m+n = 2 - 8 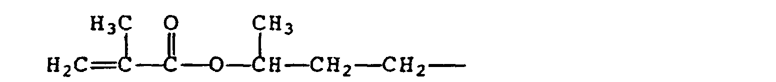 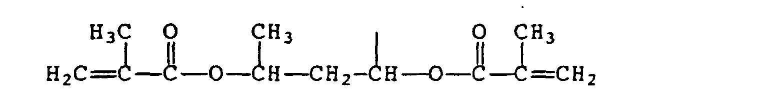 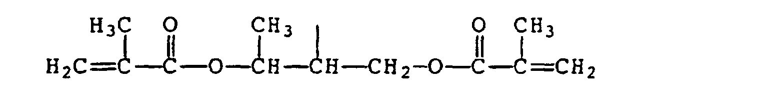 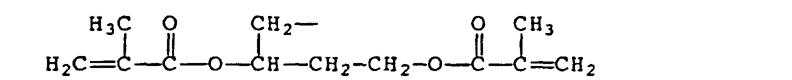 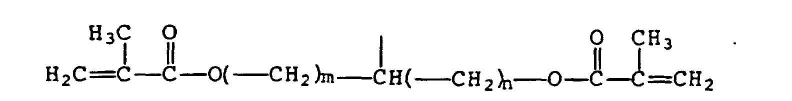 mit n und m gleich 0 bis 11 und m+n = 0 bis 11 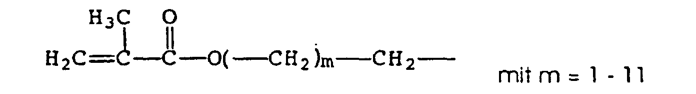 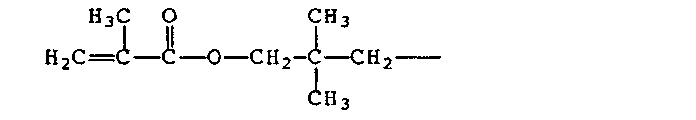 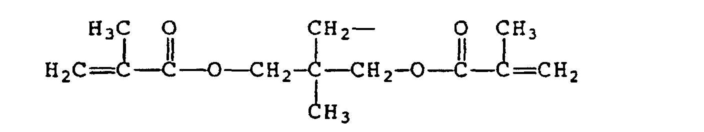 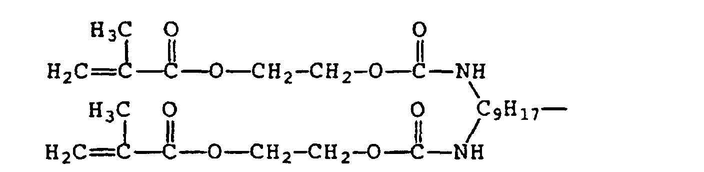 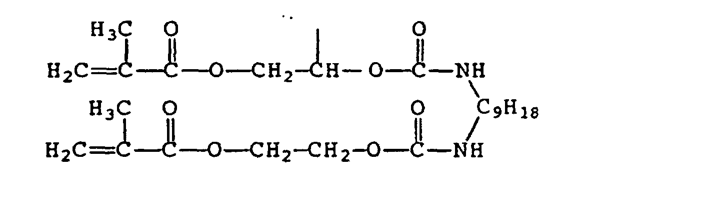 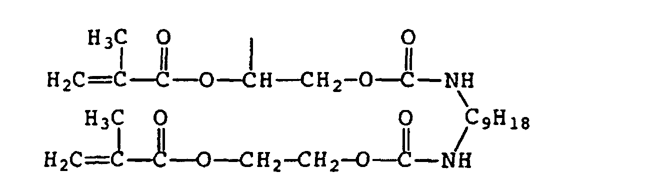 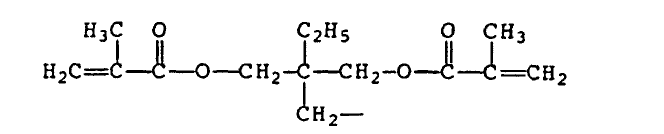 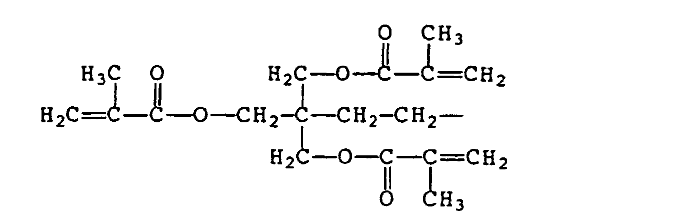 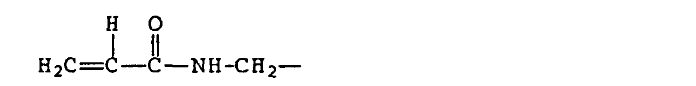 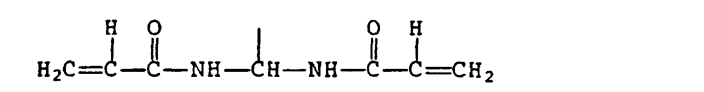 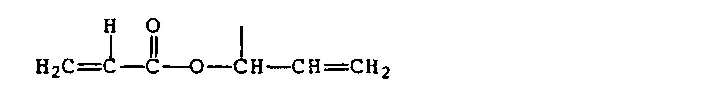 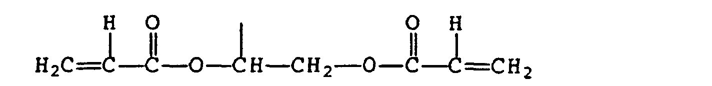 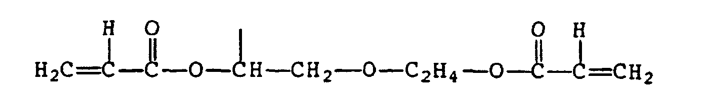 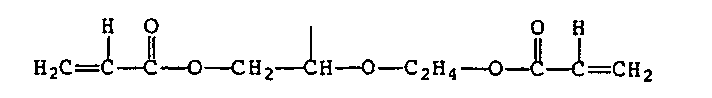 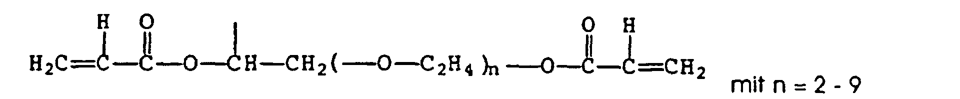 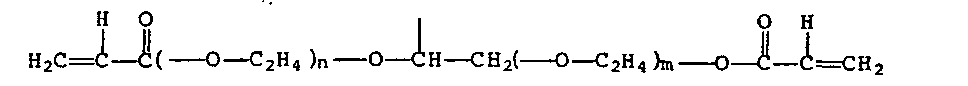 mit m = 1 - 6 und n = 1 - 6 und m + n = 2 - 8 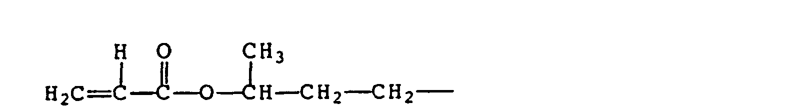 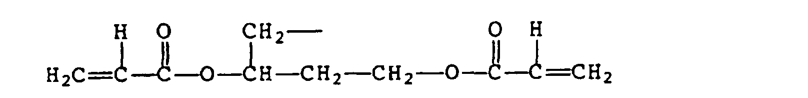 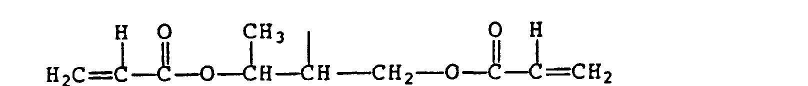 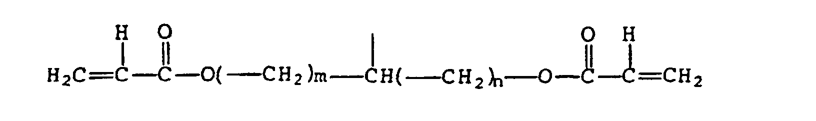 mit n und m gleich 0 bis 11 und m+n = 0 bis 11 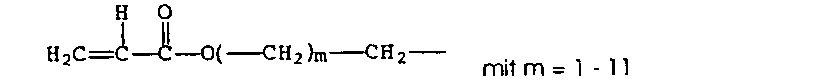 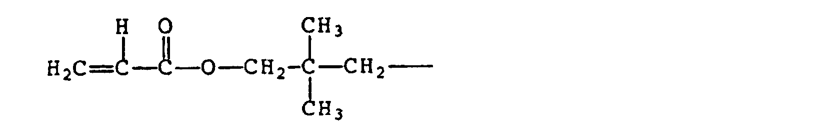 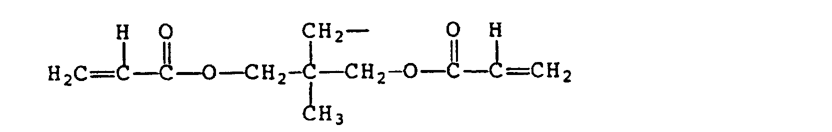 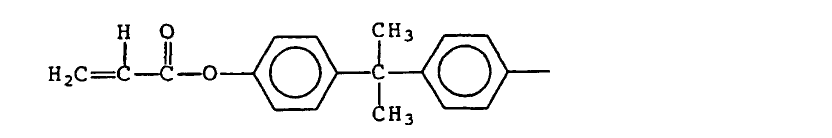 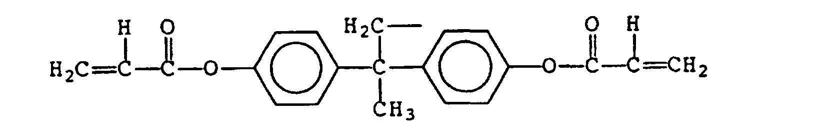 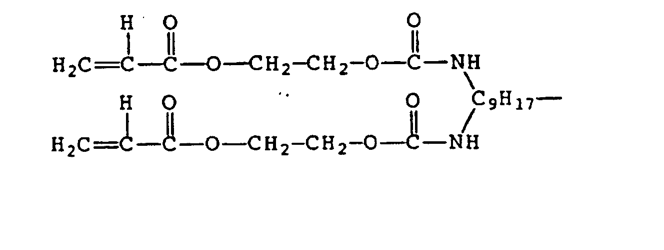 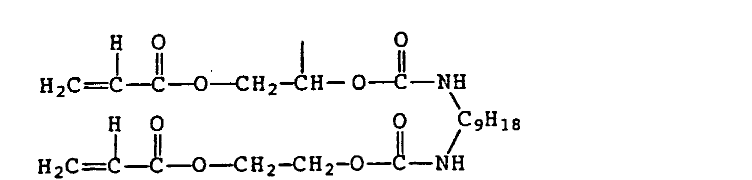 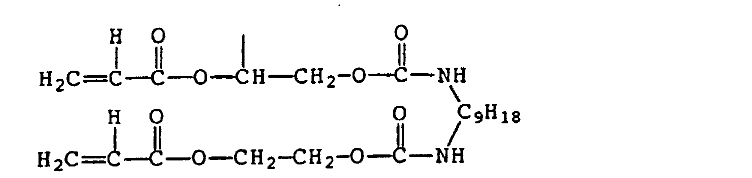 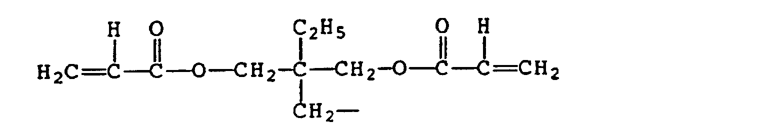 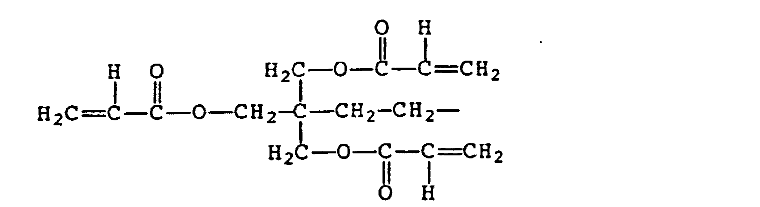 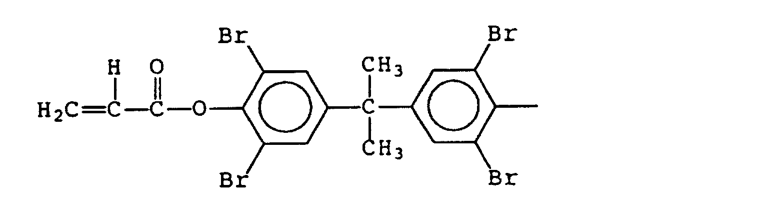 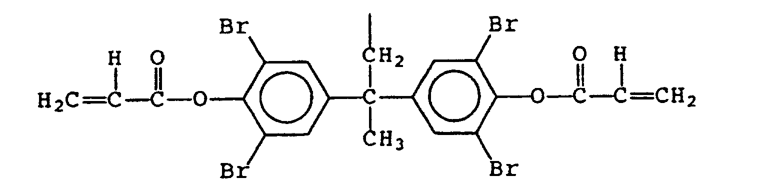 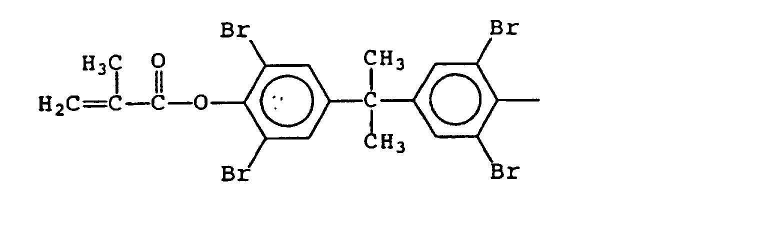 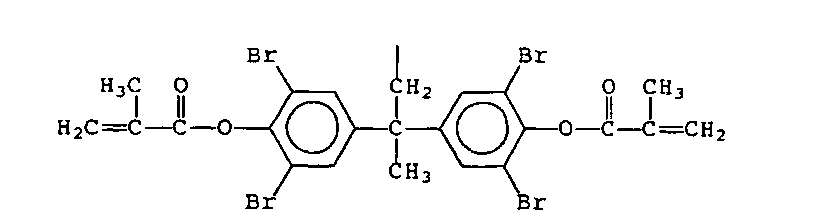 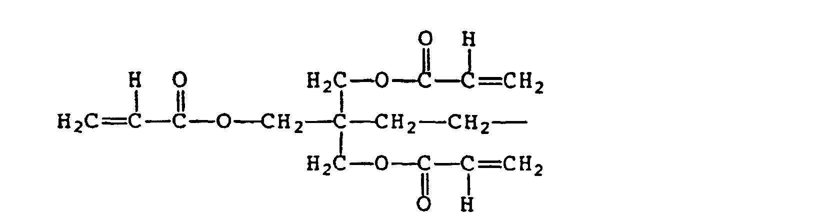 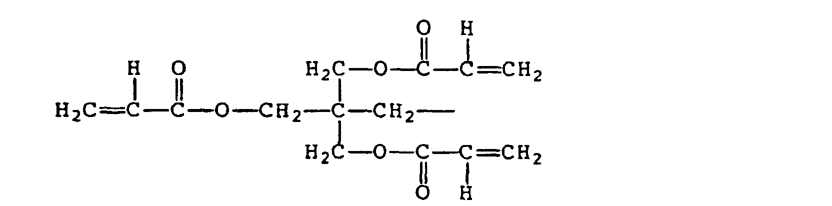 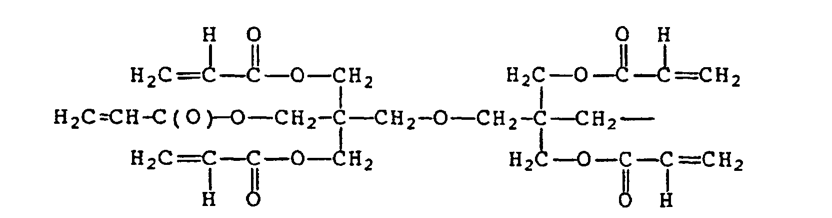 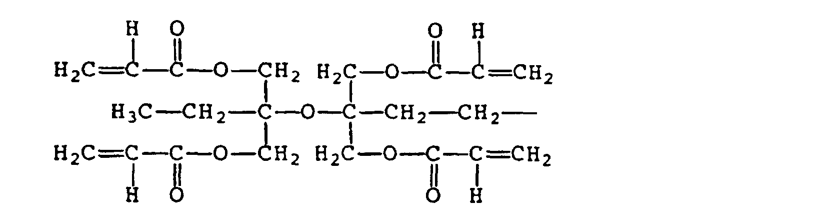 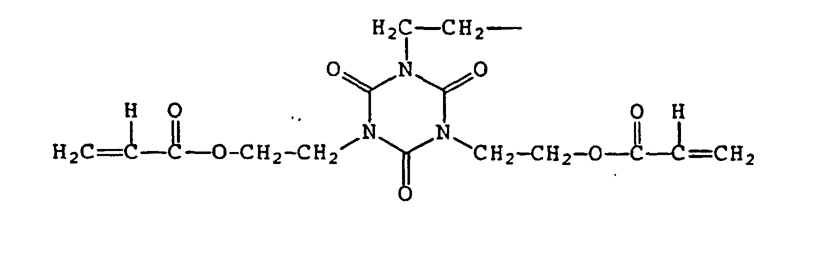 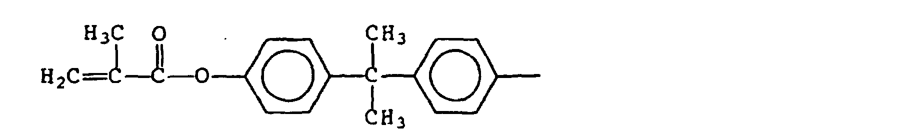 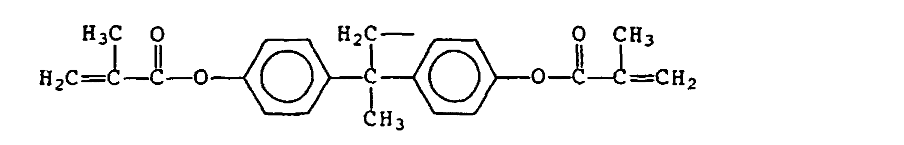 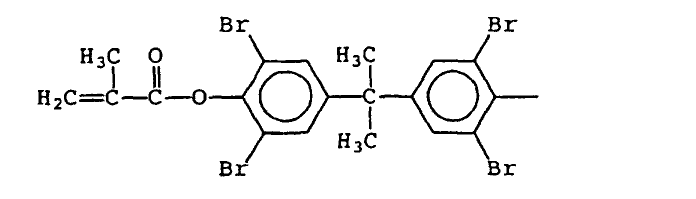 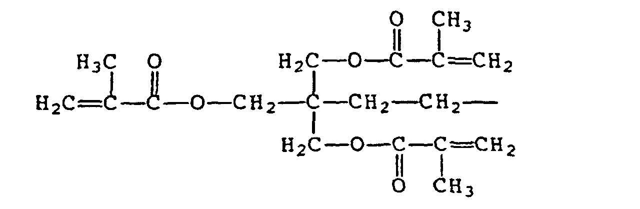 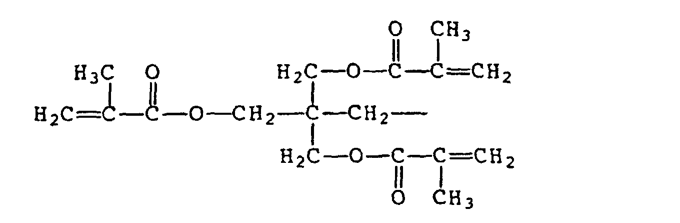 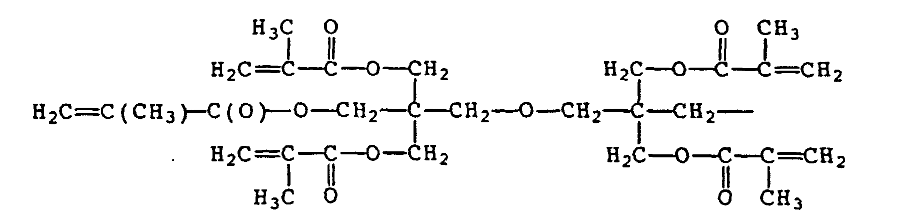 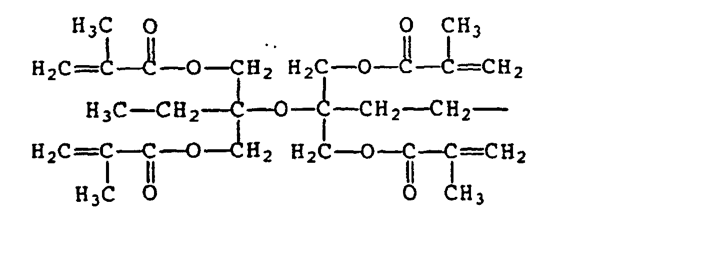 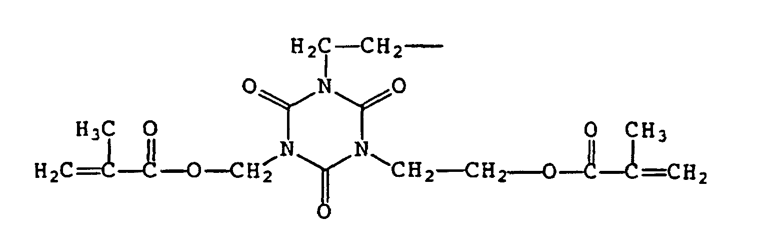 CH₂=CH-O-(CH₂)₃-CH₂-, CH₂=CH-CO-NH-CH₂-, CH₂=CH-CH₂-CH₂=CH-(CH₂)₂-CH₂-, CH₂=CH-CH₂-CH₂-,

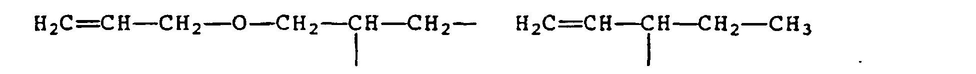

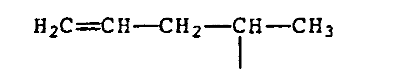

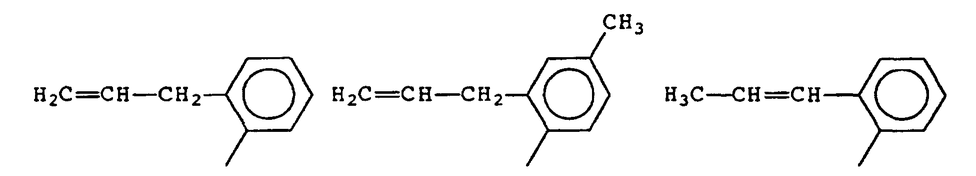

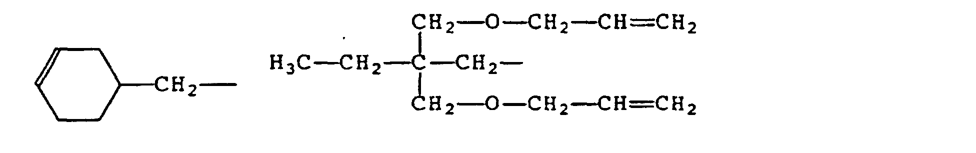

Spezielle Beispiele für Silane der allgemeinen Formel I mit Epoxidgruppen im Rest R sind :
Glycidoxymethyltrimethoxysilan, Glycidoxymethyltriethoxysilan, 2-Glycidoxyethyltrimethoxysilan, 2-Glycidoxyethyltriethoxysilan, 3-Glycidoxypropyltrimethoxysilan, 3-Glycidoxypropyltriethoxysilan, 3-Glycidoxypropyltri(methoxyethoxy)silan, 3-Glycidoxypropyltriacetoxysilan, 4-Glycidoxybutyltrimethoxysilan, 4-Glycidoxybutyltriethoxysilan, Glycidoxymethyl(methyl)dimethoxysilan, Glycidoxymethyl(ethyl)dimethoxysilon, Glycidoxymethyl(phenyl)dimethoxysilan, Glycidoxymethyl(vinyl)dimethoxysilon, Glycidoxymethyl(dimethyl)methoxysilan, 2-Glycidoxyethyl(methyl)-dimethoxysilan, 2-Glycidoxyethyl(ethyl)dimethoxysilan, 2-Glycidoxyethyl(dimethyl)methoxysilan, 3-Glycidoxypropyl(methyl)dimethoxysilan, 3-Glycidoxypropyl(ethyl)dimethoxysilan, 3-Glycidoxypropyl(dimethyl)methoxysilan, 4-Glycidoxybutyl(methyl)dimethoxysilan, 4-Glycidoxybutyl(ethyl)dimethoxysilan, 4-Glycidoxybutyl(dimethyl)methoxysilan, Bis-(glycidoxymethyl)dimethoxysilan, Bis-(glycidoxymethyl)diethoxysilan, Bis-(glycidoxyethyl)dimethoxysilan, Bis-(glycidoxyethyl)diethoxysilan, Bis(glycidoxypropyl)dimethoxysilan, Bis-(glycidoxypropyl)diethoxysilan, Tris-(glycidoxymethyl)methoxysilan, Tris-(glycidoxymethyl)ethoxysilan, Tris-(glycidoxyethyl)methoxysilan, Tris-(glycidoxyethyl)ethoxysilan, Tris-(glycidoxypropyl)methoxysilan, Tris-(glycidoxypropyl)ethoxysilan, 3.4-Epoxycyclohexylmethyltrimethoxysilan, 3.4-Epoxycyclohexylmethyltriethoxysilan, 3.4-Epoxycyclohexylethyltrimethoxysilan, 3.4-Epoxycyclohexylpropyltrimethoxysilan und 3.4-Epoxycyclohexylbutyltrimethoxysilan.

In weiteren Ausführungsformen werden zur Herstellung der erfindungsgemäßen Aromabarriereschicht Silane der allgemeinen Formel VI eingesetzt,

{Xₐ R_{b} Si[(R'A)_{c}]_{(4-a-b)}}ₓ B (VI)

in der die Reste und Indices aleich oder verschieden sind und
- A: gleich O, S, PR", POR", NHC(O)O oder NHC(O)NR" bedeutet,
- B: ein geradkettiger oder verzweigter organischer Rest ist, der sich von einer Verbindung B' mit mindestens einer ( für c = 1 und A = NHC(O)O oder NHC(O)NR'') bzw. mindestens zwei C=C-Doppelbindungen und 5 bis 50 Kohlenstoffatomen ableitet,
- R: gleich Alkyl, Alkenyl, Aryl, Alkylaryl oder Arylalkyl,
- R': gleich Alkylen, Arylen oder Alkylenarylen,
- R": gleich Wasserstoff, Alkyl oder Aryl,
- X: gleich Wasserstoff, Halogen, Hydroxy, Alkoxy, Acyloxy, Alkylcarbonyl, Alkoxycarbonyl oder NR''₂ ist, mit
- a: gleich 1, 2 oder 3,
- b: gleich 0, 1 oder 2,
- c: gleich 0 oder 1, und
- x: gleich einer ganzen Zahl, deren Maximalwert der Anzahl von Doppelbindungen in der Verbindung B' minus 1 entspricht, bzw. gleich der Anzahl von Doppelbindungen in der Verbindung B' ist, wenn c = 1 und A für NHC(O)O oder NHC(O)NR" steht,
wobei die obigen Alkyl- bzw. Alkenyl-Reste gegebenenfalls substituierte gerodkettige, verzweigte oder cyclische Reste mit 1 bzw. 2 bis 20 Kohlenstoffatomen sind, Aryl für gegebenenfalls substituiertes Phenyl, Naphthyl oder Biphenyl steht und sich die obigen Alkoxy-, Acyloxy-, Alkylcarbonyl-, Alkoxycarbonyl-, Alkylaryl-, Arylalkyl-, Arylen-, Alkylen- und Alkylenaryl-Reste von den oben definierten Alkyl- und Aryl-Resten ableiten.

Die Silane der allgemeinen Formel VI sind über die Reste B polymerisierbar, d.h. hartbar, und über die Reste X hydrolysierbar, wobei bei der hydrolytischen Kondensation über die Reste X das anorganische Netzwerk mit Si-O-Si-Einheiten aufgebaut wird und über die Polymerisation der Reste B das organische Netzwerk. Für die Reste X und R gilt das für die allgemeine Formel gesagte.

In bevorzugten Ausführungsformen der Silane der allgemeinen Formel VI sind die Reste A, R, R' und X sowie die Indices a, b und c wie folgt definiert:
- X =: (C₁-C₄)-Alkoxy, bevorzugt Methoxy und Ethoxy, oder Halogen, bevorzugt Chlor;
- R =: (C₁-C₄)-Alkyl, bevorzugt Methyl und Ethyl;
- R' =: (C₁-C₄)-Alkylen, bevorzugt Methylen und Propylen;
- A =: O, S, NHC(O)O oder NHC(O)NR'';
- a =: 1, 2 oder 3;
- c =: 0 oder 1;
- 4-a-b =: 0 für c = 0 und 1 für c = 1.

Ganz besonders bevorzugt ist es, wenn die Einheit mit dem Index x ausgewählt ist aus Triethoxysilyl, Methyldiethoxysilyl, Methyldichlorsilyl, 3-Methyldimethoxysilylpropylthio, 3-Triethoxysilyl-propylthio, Ethoxydimethylsilylmethylthio, Methyldiethoxysilylmethylthio, Trimethoxysilyl oder 3-Triethoxysilyl-propylurethan.

Der Rest B in der allgemeinen Formel VI leitet sich ab von einer substituierten oder unsubstituierten Verbindung B' mit mindestens einer bzw. mit mindestens zwei C=C- Doppelbindungen, z.B. mit Vinyl-, Allyl-, Acryl- und/oder Methacrylgruppen, und mit 5 bis 50, vorzugsweise mit 6 bis 30 Kohlenstoff-Atomen. Vorzugsweise leitet sich B ab von einer substituierten oder unsubstituierten Verbindung B' mit zwei oder mehreren Acrylat- und/oder Methacrylatgruppen. Falls die Verbindung B' substituiert ist, können die Substituenten unter den oben genannten Substituenten gewählt sein.

Bei weiteren bevorzugten Ausführungsformen der Silane der allgemeinen Formel VI leitet sich B von Acrylsäureestern von Trimethylolpropan, Pentaerythrit, Dipentaerythrit, C₂ - C₄-Alkandiolen, z.B. von Glycerin (z.B. Glycerindimethacrylat), Polyethylenglycolen, Polypropylenglycolen oder von gegebenenfalls substituiertem und/oder alkoxyliertem Bisphenol A ab.

Konkrete Beispiele für Silane der allgemeinen Formel VI sowie deren Herstellung sind der EP 0451709 A2 oder der DE 4011044 C2 zu entnehmen.

Zur Erhöhung des anorganischen Anteils der Aromabarriereschicht können zu deren Herstellung Silane der allgemeinen Formel II eingesetzt werden,

SiX₄ (II)

in der die Reste X gleich oder verschieden und wie im Falle der allgemeinen Formel I definiert sind. Ohne Einschränkung der Allgemeinheit sind konkrete Beispiele für derartige Silane Si(OCH₃)₄, Si(OC₂H₅)₄, Si(OCH₃)(OC₂H₅)₃, Si(OCH₃)₂(OC₂H₅)₂ und Si(OCH₃)₃(OC₂H₅).

Ebenso ist es möglich, von Silanen der allgemeinen Formel II abgeleitete Vorkondensate einzusetzen. Ohne Einschränkung der Allgemeinheit sind Beispiele für derartige Vorkondensate

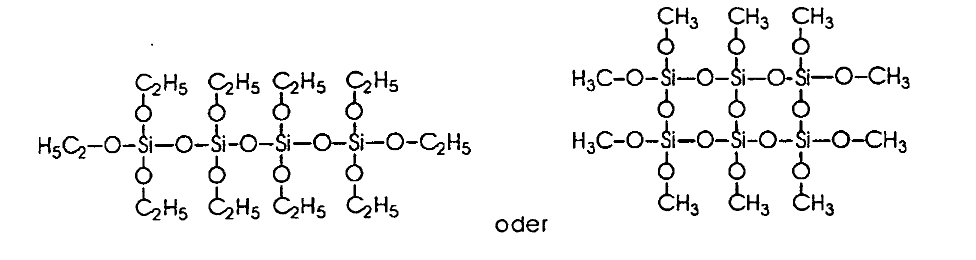

Zur Erhöhung des organischen Anteils der Aromabarriereschicht können zu deren Herstellung Silane der allgemeinen Formel III eingesetzt werden,

SiR₄ (III)

in der die Reste R gleich oder verschieden und wie im Falle der allgemeinen Formel I definiert sind. Weisen Silane der allgemeinen Formel III polymerisierbare, polyaddierbare oder polykondensierbare Gruppen auf, so üben sie die Funktion eines Netzwerkbildners aus, fehlen derartige Reste, so sind diese Silane als Netzwerkwandler eingesetzt. Ohne Einschränkung der Allgemeinheit sind konkrete Beispiele für derartige Silane Si(CH₃)₄, Si(C₂H₅)₄, Si(CH₃)(C₂H₅)₃, Si(CH₃)₂(C₂H₅)₂, Si(CH₃)₃(C₂H₅) oder Tetravinylsilan.

Ebenso können zur Erhöhung des organischen Anteils organisch modifizierte Di-, Tri-, Tetra- oder Oligosiloxane eingesetzt werden. Ohne Einschränkung der Allgemeinheit sind Beispiele für derartige Siloxane 1.1.3.3-Tetravinyldimethyldisiloxan oder 1.3.5.7-Tetravinyltetramethylcyclotetrasiloxan

Diese Silane bzw. Siloxane sind käuflich erwerbbar oder nach Methoden herstellbar, wie sie z.B. in W. Noll, Chemie und Technologie der Silicone, Verlag Chemie, Weinheim/Bergstraße, 1986, beschrieben sind.

Neben den Silanen der allgemeinen Formel I, II oder III können noch weitere hydrolytisch kondensierbare Verbindungen des Siliciums oder anderer Elemente aus der Gruppe Al, Ti, Zr, B, P, Sn, Pb, der Übergangsmetalle, der Lanthaniden und der Actiniden entweder als solche oder bereits in vorkondensierter Form zur Herstellung der erfindungsgemäßen Aromabarriereschichten herangezogen werden.

Zur Erhöhung der Harte und der Abriebbestandigkeit der erfindungsgemäßen Aromabarriereschichten werden z.B. hydrolysierbare Aluminium- und/oder Titan- und/oder Zirkonium-Verbindungen eingesetzt. Geeignete Aluminiumverbindungen weisen die allgemeine Formel IV auf,

AIR¹ ₃ (IV)

in der die Reste R¹ gleich oder verschieden sind und Halogen, Hydroxy, Alkoxy oder Acyloxy bedeuten. Besonders bevorzugte Aluminiumverbindungen sind Aluminiumalkoxide und -halogenide. In diesem Zusammenhang können als konkrete Beispiele Al(OCH₃)₃, Al(OC₂H₅)₃, Al(O-n-C₃H₇)₃, Al(O-i-C₃H₇)₃, Al(OC₄H₉)₃, Al(O-i-C₄H₉)₃, Al(O-s-C₄H₉)₃, AlCl₃ und AlCl(OH)₂ genannt werden. Bei Raumtemperatur flüssige Verbindungen, wie z.B. Aluminium-sek-butylat und Aluminium-isopropylat, werden besonders bevorzugt.

Geeignete hydrolysierbare Titan- und Zirkoniumverbindungen, die erfindungsgemäß eingesetzt werden können, sind solche der allgemeinen Formel V,

MX_{y}R_{4-y} (V)

in der M Titan oder Zirkonium bedeutet, die Reste X und R gleich oder verschieden und wie im Falle der allgemeinen Formel I definiert sind, und y eine ganze Zahl von 1 bis 4 darstellt. Konkrete Beispiele für einsetzbare Zr- und Ti-Verbindungen sind TiCl₄, Ti(OC₂H₅)₄, Ti(OC₃H₇)₄, Ti(O-i-C₃H₇)₄, Ti(OC₄H₉)₄, Ti(2-ethylhexoxy)₄, ZrCl₄, Zr(OC₂H₅)₄, Zr(OC₃H₇)₄, Zr(O-i-C₃H₇)₄, Zr(OC₄H₉)₄, Zr(2-ethylhexoxy)₄ und ZrOCl₂.

Weitere hydrolysierbare Verbindungen, die zur Herstellung der erfindungsgemäßen Aromabarriereschichten eingesetzt werden können, sind z.B. Bortrihalogenide und Borsäureester, wie z.B. BCl₃, B(OCH₃)₃ und B(OC₂H₅)₃, Zinntetrahalogenide und Zinntetraalkoxide, wie z.B. SnCl₄ und Sn(OCH₃)₄, und Vanadylverbindungen, wie z.B. VOCl₃ und VO(OCH₃)₃.

Durch den erfindungsgemäßen Einsatz von von Siliciumverbindungen verschiedenen hydrolysierbaren Verbindungen ist es möglich, Heteroatome in das anorganische Netzwerk einzubauen, um damit die Eigenschaften der erfindungsgemäßen Aromabarriereschichten den Anforderungen des jeweiligen Anwendungsfalles anzupassen.

Zur Verbesserung der mechanischen Eigenschaften der erfindungsgemäßen Aromabarriereschichten können dem organisch modifizierten Kieselsäure(hetero)polykondensat Füllstoffe zugesetzt sein. Bevorzugt ist es, wenn es sich hierbei um porenfreie SiO₂- und/oder Al₂O₃-Partikel handelt. Besonders bevorzugt ist es, wenn die Oberfläche dieser Partikel derart funktionalisiert ist, daß diese über kovalente Bindungen in das organische Netzwerk der Aromabarriereschicht eingebaut werden können. Dadurch werden Grenzflächen zwischen dem Füllstoff und der Kieselsäure(hetero)polykondensat-Matrix vermieden. Ohne Einschränkung der Allgemeinheit tragen diese Partikel an der Oberfläche z.B. Amino- oder (Meth)Acrylat-Gruppen. Die Funktionalisierung von SiO₂-Partikeln erfolgt beispielsweise über die Kondensation von Silanen der allgemeinen Forme I mit SiOH-Gruppen der SiO₂-Partikeloberfläche. Neben SiO₂- und Al₂O₃-Partikel können als Füllstoffe noch Glimmer, Glasflakes oder Glasplättchen eingesetzt werden, deren Oberfläche ebenfalls funktionalisiert sein kann. Die bevorzugte Teilchengröße der Füllstoffe liegt zwischen 40 Å und 10 µm, kleinere oder größere Teilchengroßen sind ebenfalls möglich. Desweiteren ist es bevorzugt, wenn bis zu 10 Gew.-% der erfindungsgemäßen Aromabarriereschicht aus Füllstoffen besteht. Ein höherer Anteil an Füllstoffen ist aber ebenfalls möglich. Generell kann gesagt werden, daß die Transparenz der erfindungsgemäßen Aromabarriereschicht mit steigendem Füllstoffgehalt abnimmt.

Überraschenderweise wurde festgestellt, daß durch die Zugabe von funktionalisierten Füllstoffen nicht nur die mechanischen Eigenschaften der erfindungsgemäßen Aromabarriereschicht verbessert werden, sondern auch die Barriereeigenschaften selbst.

In weiteren Ausführungsformen der erfindungsgemäßen Aromabarriereschichten ist dem Kieselsaure(hetero)polykondensat Methocrylsäure zugesetzt. Sie dient zum einen als Komplexierungsmittel für gegebenenfalls eingesetzte hydrolysierbare Metallverbindungen und damit zur Erhöhung der Topfzeit. Weitere geeignete Komplexierungsmittel sind z.B. Acetylaceton, mehrfach funktionelle Amine oder mehrfach funktionelle Alkohole.

Die Verwendung von Methacrylsaure bietet noch weitere Vorteile, indem sie z.B. zusätzlich die Funktion eines organischen Netzwerkbildners ausübt. Der Komplexbildner ist also in das organische Netzwerk einpolymerisierbar, ohne dadurch die Abriebbeständigkeit der erfindungsgemaßen Aromabarriereschichten zu reduzieren. Anstelle von Methacrylsäure können auch andere polymerisierbare Komplexbildner eingesetzt werden.

Ferner übt die Methacrylsäure auch die Funktion eines Reaktivmonomers aus. Damit ist die Einstellung der Viskosität, d.h. der Lackrheologie möglich. Dies bietet zudem den Vorteil, daß nach dem Beschichtungsvorgang das Lösungsmittel nicht entfernt werden muß, es wird einpolymerisiert.

Die Herstellung der erfindungsgemäßen Aromabarriereschicht erfolgt durch Aufbringen der erfindungsgemäßen Beschichtungszusammensetzung auf das Trögermaterial nach üblichen Methoden, z.B. durch ein Sprüh-, Schleuder-, Walz- oder Rakelverfahren. Anschließend wird die Beschichtung gegebenenfalls getrocknet und thermisch und/oder unter Einwirkung von elektromagnetischer Strahlung, z.B. UV-Strahlung oder Mikrowellen, gehärtet. Elektronenstrahlhärtung ist ebenfalls möglich.

Die Beschichtungszusammensetzung wird durch hydrolytische Kondensation einer oder mehrerer hydrolytisch kondensierbarer Verbindungen des Siliciums und gegebenenfalls anderer Elemente aus der Gruppe B, Al, P, Sn, Pb, der Übergangsmetalle, der Lanthaniden und der Actiniden, und/oder von den oben genannten Verbindungen abgeleiteten Vorkondensaten, gegebenenfalls in Anwesenheit eines Katalysators und/oder eines Lösungsmittels durch Einwirken von Wasser oder Feuchtigkeit erhalten. Dazu werden die Silane der allgemeinen Formel I entweder alleine oder zusammen mit anderen hydrolytisch kondensierbaren und gegebenenfalls polymerisierbaren und/oder polyaddierbaren und/oder polykondensierbaren Komponenten durch hydrolytische Kondensation zu Kieselsaure(hetero)polykondensaten verarbeitet. Diese gegebenenfalls eingesetzten Komponenten können z.B. Silane der allgemeinen Formel II und/oder III sein, oder die bereits genannten Metallverbindungen der allgemeinen Formel IV und/oder V. Dabei wird durch die hydrolytische Kondensation das anorganische Netzwerk aufgebaut, das durch Zusatz weiterer hydrolytisch kondensierbarer Verbindungen zusätzlich modifiziert werden kann. In dieses Kieselsaure(hetero)polykondensat werden dann die weiteren Komponenten, wie z.B. Füllstoffe etc. durch Zumischen eingebaut.

Zum Aufbau des anorganischen Netzwerkes, d.h. zur Herstellung des organisch modifizierten Kieselsäure(hetero)polykondensates, werden die hydrolytisch kondensierbaren Komponenten gegebenenfalls in Anwesenheit eines Katalysators und/oder eines Lösungsmittels durch Einwirken von Wasser oder Feuchtigkeit hydrolysiert und polykondensiert. Diese Polykondensation erfolgt vorzugsweise nach dem Sol-Gel-Verfahren, wie es z.B. in den Offenlegungsschriften DE 2758414, 2758415, 3011761, 3826715 und 3835968 beschrieben ist.

Die Herstellung der organisch modifizierten Keselsaure(hetero)polykondensate kann in der auf dem Gebiet der Poly(hetero)kondensate üblichen Art und Weise erfolgen. Werden praktisch ausschließlich Siliciumverbindungen eingesetzt, kann die hydrolytische Kondensation in den meisten Fällen dadurch erfolgen, daß man den zu hydrolysierenden Siliciumverbindungen, die entweder als solche oder gelöst in einem geeigneten Lösungsmittel vorliegen, das erforderliche Wasser bei Raumtemperatur oder unter leichter Kühlung direkt zugibt (vorzugsweise unter Rühren und gegebenenfalls in Anwesenheit eines Hydrolyse- und Kondensationskatalysators) und die resultierende Mischung daraufhin einige Zeit (ein bis mehrere Stunden) rührt.

Bei Anwesenheit reaktiver Verbindungen des Al, Ti oder Zr, die auch in komplexierter Form vorliegen können, empfiehlt sich in der Regel eine stufenweise Zugabe des Wassers. Unabhangig von der Reaktivität der anwesenden Verbindungen erfolgt die Hydrolyse in der Regel bei Temperaturen zwischen -20 und 130 °C, vorzugsweise zwischen 0 und 30 °C bzw. dem Siedepunkt des gegebenenfalls eingesetzten Lösungsmittels. Wie bereits angedeutet, hängt die beste Art und Weise der Zugabe von Wasser vor allem von der Reaktivität der eingesetzten Ausgangsverbindungen ab. So kann man z.B. die gelösten Ausgangsverbindungen langsam zu einem Überschuß an Wasser tropfen oder man gibt Wasser in einer Portion oder portionsweise den gegebenenfalls gelösten Ausgangsverbindungen zu. Es kann auch nützlich sein, das Wasser nicht als solches zuzugeben, sondern es mit Hilfe von wasserhaltigen organischen oder anorganischen Systemen in das Reaktionssystem einzutragen. Als besonders geeignet hat sich in vielen Fallen die Eintragung der Wassermenge in das Reaktionsgemisch mit Hilfe von feuchtigkeitsbeladenen Adsorbentien, z.B. von Molekularsieben, und von wasserhaltigen, oiganischen Lösungsmitteln, z.B. von 80 %-igem Ethanol, erwiesen. Die Wasserzugabe kann aber auch über eine chemische Reaktion erfolgen, bei der Wasser im Laufe der Reaktion freigesetzt wird. Beispiele hierfür sind Veresterungen.

Wenn ein Lösungsmittel verwendet wird, kommen neben den niederen aliphatischen Alkoholen (z.B. Ethanol oder i-Propanol) auch Ketone, vorzugsweise niedere Dialkylketone, wie Aceton oder Methylisobutylketon, Ether, vorzugsweise niedere Dialkylether wie Diethylether oder Dibutylether, THF, Amide, Ester, insbesondere Essigsaureethylether, Dimethylformamid, Amine, insbesondere Triethylamin, und deren Gemische in Frage.

Die Ausgangsverbindungen müssen nicht notwendigerweise bereits alle zu Beginn der Hydrolyse (Polykondensation) vorhanden sein, sondern in bestimmten Fällen kann es sich sogar als vorteilhaft erweisen, wenn nur ein Teil dieser Verbindungen zunächst mit Wasser in Kontakt gebracht wird und später die restlichen Verbindungen zugegeben werden.

Um insbesondere bei Verwendung von von Siliciumverbindungen verschiedenen hydrolysierbaren Verbindungen Ausföllungen während der Hydrolyse und der Polykondensation so weit wie möglich zu vermeiden, kann die Wasserzugabe in mehreren Stufen, z.B. in drei Stufen, durchgeführt werden. Dabei kann in der ersten Stufe z.B. ein Zehntel bis ein Zwanzigstel der zur Hydrolyse benötigten Wassermenge zugegeben werden. Nach kurzem Rühren kann die Zugabe von einem Fünftel bis zu einem Zehntel der erforderlichen Wassermenge erfolgen und nach weiterem kurzen Rühren kann schließlich der Rest zugegeben werden.

Die Kondensationszeit richtet sich nach den jeweiligen Ausgangskomponenten und deren Mengenanteilen, dem gegebenenfalls verwendeten Katalysator, der Reaktionstemperatur, etc. Im allgemeinen erfolgt die Polykondensation bei Normaldruck, sie kann jedoch auch bei erhöhtem oder bei verringertem Druck durchgeführt werden.

Das so erhaltene Polykondensat kann entweder als solches oder nach teilweiser oder nahezu vollständiger Entfernung des verwendeten Losungsmittels bzw. des wahrend der Reaktion gebildeten Losungsmittels zu den erfindungsgemäßen Aromabarriereschichten verarbeitet werden. In einigen Fällen kann es sich als vorteilhaft erweisen, in dem noch der Polykondensation erhaltenen Produkt das überschüssige Wasser und das gebildete und gegebenenfalls zusätzlich eingesetzte Lösungsmittel durch ein anderes Lösungsmittel zu ersetzen, um das Polykondensat zu stabilisieren. Zu diesem Zweck kann die Reaktionsmischung z.B. im Vakuum bei leicht erhöhter Temperatur (bis maximal 80 °C) so weit eingedickt werden, daß sie noch problemlos mit einem anderen Lösungsmittel aufgenommen werden kann.

Dem Polykondensat können z.B. (funktionalisierte) Füllstoffe, Lösungsmittel, Reaktivverdünner, Photoinitiatoren und gegebenenfalls weitere Zusatzstoffe zugemischt werden.

Das so erhaltene Polykondensat wird auf das Trägermaterial nach üblichen Methoden aufgetragen und durch Polymerisation und/oder Polyaddition und/oder Polykondensation der im Rest R der Silane der allgemeinen Formeln I und/oder III enthaltenen funktionellen Gruppen gehärtet. Dabei wird das organische Netzwerk aufgebaut. Die Polymerisation z.B. kann thermisch, redoxinduziert, kovalentnucleophil und/oder photochemisch unter Einsatz von Methoden erfolgen, wie sie z.B. in den DE-A1 3143820, 3826715 und 3835968 beschrieben sind.

Die Schichtdicken der erfindungsgemäßen Aromabarriereschichten kann in weiten Bereichen variiert werden. Bevorzugt sind Schichtdicken zwischen 1 µm und 50 µm, niedrigere oder höhere Werte sind aber ebenfalls möglich.

Als Trägermaterial für die erfindungsgemäße Aromabarriereschicht kommen biologisch abbaubare Polymere und vorollem native Polymere, wie z.B. Zellglas, eiweiß- oder starkehaltige Polymere, mit inhärent geringer Barrierewirkung als Tragermaterialien in Frage. Auch Papier, Pappe, beschichtetes Papier oder beschichtete Pappe sind als Trägermaterialien geeignet. Mit der erfindungsgemäßen Beschichtung lassen sich bei dünnen Trögermaterialien (z.B. Folien) mit Dicken von mindestens 4 µm besonders ausgeprägte Verbesserungen hinsichtlich der Aromadurchlässigkeit erzielen.

Erfindungsgemäß beschichtete Kunststoffe, insbesondere native Polymere, eröffnen eine große Anzahl neuer Anwendungsgebiete, welche Kunststoffen bislang verschlossen blieben, nämlich Verpackungen für Lebensmittel, für pharmazeutische oder chemische Produkte. In vielen Bereichen kann Metall oder Glas durch erfindungsgemäß beschichtete Kunststoffe substituiert werden, was eine drastische Gewichtsersparnis bedeutet. Desweiteren lassen sich durch derart beschichtete Kunststoffe, im Gegensatz zu Metallen, transparente Aromabarrierematerialien fertigen.

Durch Art und Anteil des organischen und des anorganischen Netzwerkes, sowie über Netzwerkwandler, lassen sich die Barriereeigenschaften der organisch modifizierten Kieselsäure(hetero)polykondensate gezielt einstellen. Auf diese Weise können sowohl Benetzungsverhalten und Schichthaftung, sowie auch die Sperreigenschaften der erfindungsgemäßen Aromabarriereschichten optimiert werden. Z.B. durch die Zugabe von funktionalisierten SiO₂- und/oder Al₂O₃-Partikeln, die kovalent an das organische Netzwerk angebunden sind, wird die Dichte des anorganischen Netzwerkes erhöht.

Im folgenden wurden mittels eines gaschromatographischen Testverfahrens die Permeationsraten der folgenden sieben Aromastoffe, die sich in ihrer Polarität, Molekülgestalt und Molekülgröße voneinander unterscheiden, gleichzeitig erfaßt. Zudem erlaubt das sehr exakte Meßverfahren, mit äußerst geringen Aromastoffkonzentrationen zu arbeiten, wodurch bei der Messung Bedingungen simuliert wurden, die denen der Praxis sehr nahe kommen. Die Permeationsmessung wurde bei 23 °C und Dampfdrücken der Aromastoffe von 1.0 • 10⁻⁶ - 4.7 • 10⁻⁶ bar durchgeführt. Eine genaue Beschreibung des Meßverfahrens ist in R. Franz, Packag. Technol. Sci. 1993, 6, 91-102, offenbart.

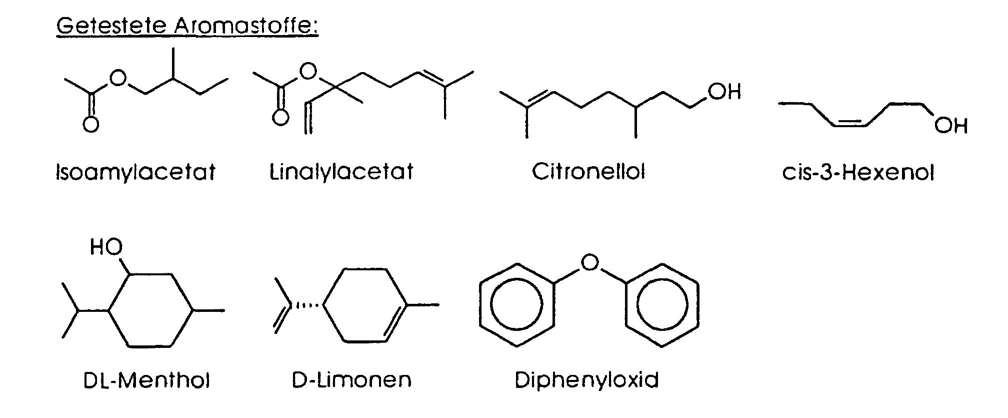

Die erfindungsgemaßen Beschichtungsmaterialien werden, wie bereits beschrieben, über einen Sol-Gel-Prozeß hergestellt. Während dieses Prozesses erfolgt über die gesteuerte Hydrolyse und Kondensation von Alkoxysilanen, Organoalkoxysilanen, Acrylatalkoxysilanen bzw. Metallalkoholaten ein teilweiser Aufbau des anorganischen Netzwerkes durch Bildung von anorganisch-organischen Oligomeren. Während der thermisch bzw. UV-induzierten Polymerisation wird das organische Netzwerk durch Polymerisation der organofunktionellen Gruppen gebildet.

### Ausführungsbeispiel 1:

Der Beschichtungslack leitet sich von folgenden Komponenten ab:

| | |
|---|---|
| 40.0 mol-% | Tetramethoxysilan |
| 32.5 mol-% | 3-Glycidoxypropyltrimethoxysilan |
| 5.0 mol-% | 3-Aminopropyltrimethoxysilan |
| 12.5 mol-% | Al(OBu^{s})₃ |
| 10.0 mol-% | Zr(OPr)₄ |

Nach der Beschichtung wird dieser Lack thermisch gehärtet.
Der Lack gemaß diesem Ausfuhrungsbeispiel weist einen hohen anorganischen Anteil auf, was zu einem dichten anorganischen Netzwerk in der Beschichtung führt.

### Ausführungsbeispiel 2:

Der Beschichtungslack leitet sich von folgenden Komponenten ab:

| | |
|---|---|
| 70.0 mol-% | 3-Methacryloxypropyltrimethoxysilan |
| 15.0 mol-% | Zr(OPr)₄ |
| 15.0 mol-% | Methacrylsäure |

Nach der Beschichtung wird der Lack durch UV-Bestrahlung gehärtet. Eine thermische Härtung ist ebenfalls möglich.

### Ausführungsbeispiel 3:

Der Beschichtungslack leitet sich von folgenden Komponenten ab:

| | |
|---|---|
| 40.0 mol-% | Tetramethoxysilan |
| 32.5 mol-% | 3-Glycidoxypropyltrimethoxysilan |
| 5.0 mol-% | 3-Aminopropyltrimethoxysilan |
| 12.5 mol-% | Al(OBu^{s})₃ |
| 10.0 mol-% | Zr(OPr)₄ |

Amino-funktionalisierte SiO₂-Partikel
Nach der Beschichtung wird dieser Lack thermisch gehärtet.
Der Lack gemäß diesem Ausführungsbeispiel weist einen hohen anorganischen Anteil auf, was zu einem dichten anorganischen Netzwerk in der Beschichtung führt.

### Ausführungsbeispiel 4:

Der Beschichtungslack leitet sich von folgenden Komponenten ab:

| | |
|---|---|
| 70.0 mol-% | 3-Methacryloxypropyltrimethoxysilan |
| 15.0 mol-% | Zr(OPr)₄ |
| 15.0 mol-% | Methacrylsaure |

Methacrylat-funktionalisierte SiO₂-Partikel
Nach der Beschichtung wird der Lack durch UV-Bestrahlung gehörtet. Eine thermische Härtung ist ebenfalls möglich.

Zur Bestimmung der Aromabarriereeigenschaften werden diese Beschichtungssysteme auf BOPP-Folien (biaxial orientiertes Polypropylen) (nicht erfindungsgemäß) und auf Zellglasfolien (Materialstärken jeweils 30 µm) appliziert.

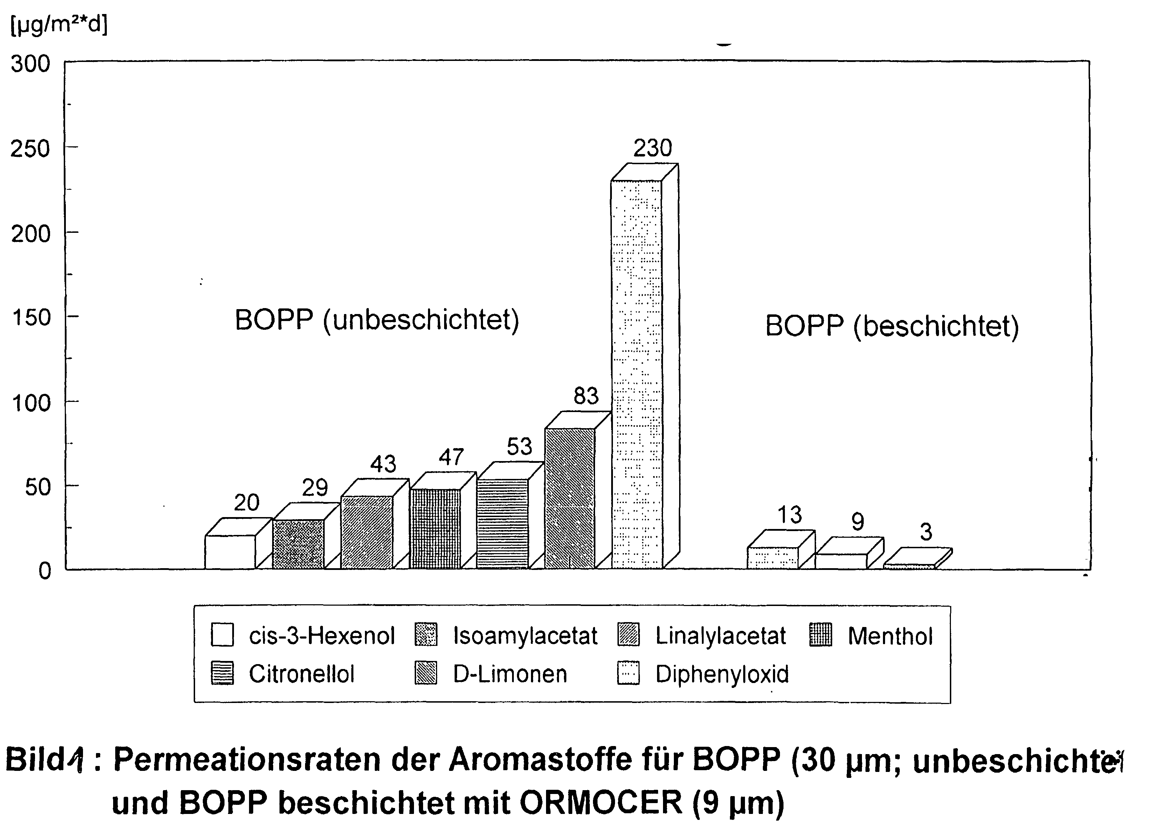

In Bild 1 sind die Permeationsraten der oben genannten Aromastoffe durch eine unbeschichtete und durch eine mit einer erfindungsgemäßen Beschichtungszusammensetzung gemäß dem Ausführungsbeispiel 1 beschichtete BOPP-Folie dargestellt. Diphenyloxid weist bei der unbeschichteten Folie die höchste Permeationsrate auf, gefolgt von D-Limonen, Citronellol, Menthol, Linalylacetat, Isoamylacetat und cis-3-Hexenol. Durch die Beschichtung der BOPP-Folie mit der erfindungsgemäßen Beschichtungszusammensetzung wird die Permeationsrate der Aromastoffe drastisch reduziert. Durch die erfindungsgemäße Beschichtung werden die Permeationsraten nicht nur extrem erniedrigt, auch die relativen Durchlassigkeiten der Aromastoffe untereinander verändern sich im Vergleich zu unbeschichtetem BOPP. Die Permeationsraten nehmen in der Reihenfolge Diphenyloxid, cis-3-Hexenol und Isoamylacetat ab. Für die vier anderen Aromastoffe zeigt die erfindungsgemäße Beschichtung keine meßbaren Durchlässigkeiten.

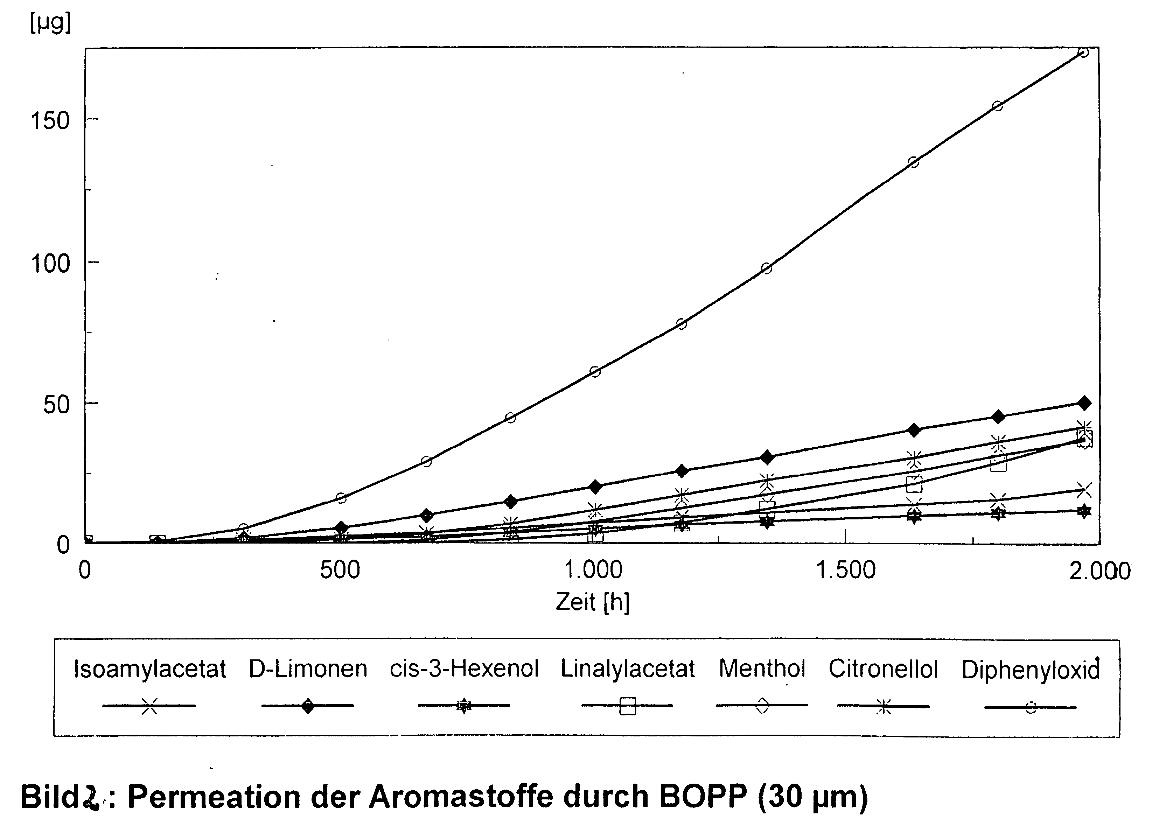

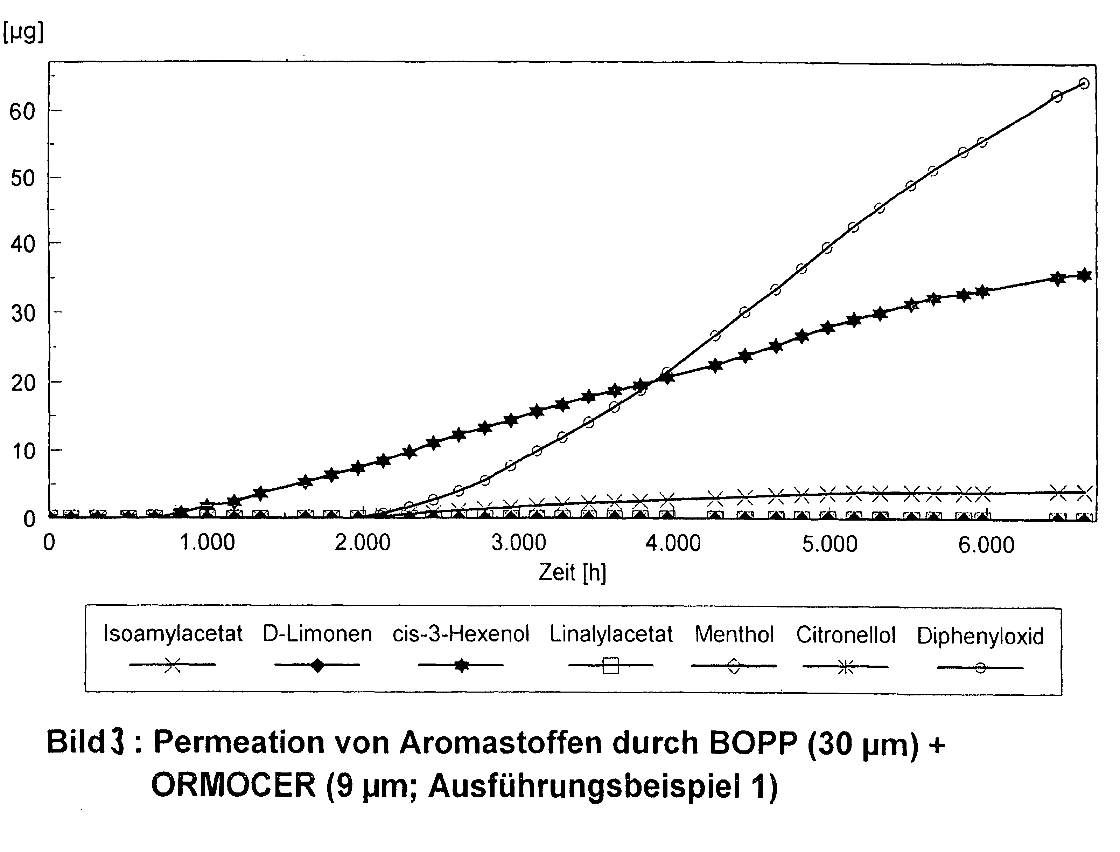

Bild 2 und 3 zeigt die Permeationen der Aromastoffe durch unbeschichtetes und durch erfindungsgemäß beschichtetes BOPP, aufgetragen gegen die Zeit. Während bei der unbeschichteten BOPP-Folie schon nach kurzer Zeit eine Permeation der Aromastoffe nachweisbar ist, kann die Permeation von Aromastoffen bei der erfindungsgemäß beschichteten Folie erst nach einer bestimmten längeren Meßzeit, der sogenannten Durchbruchszeit, detektiert werden.

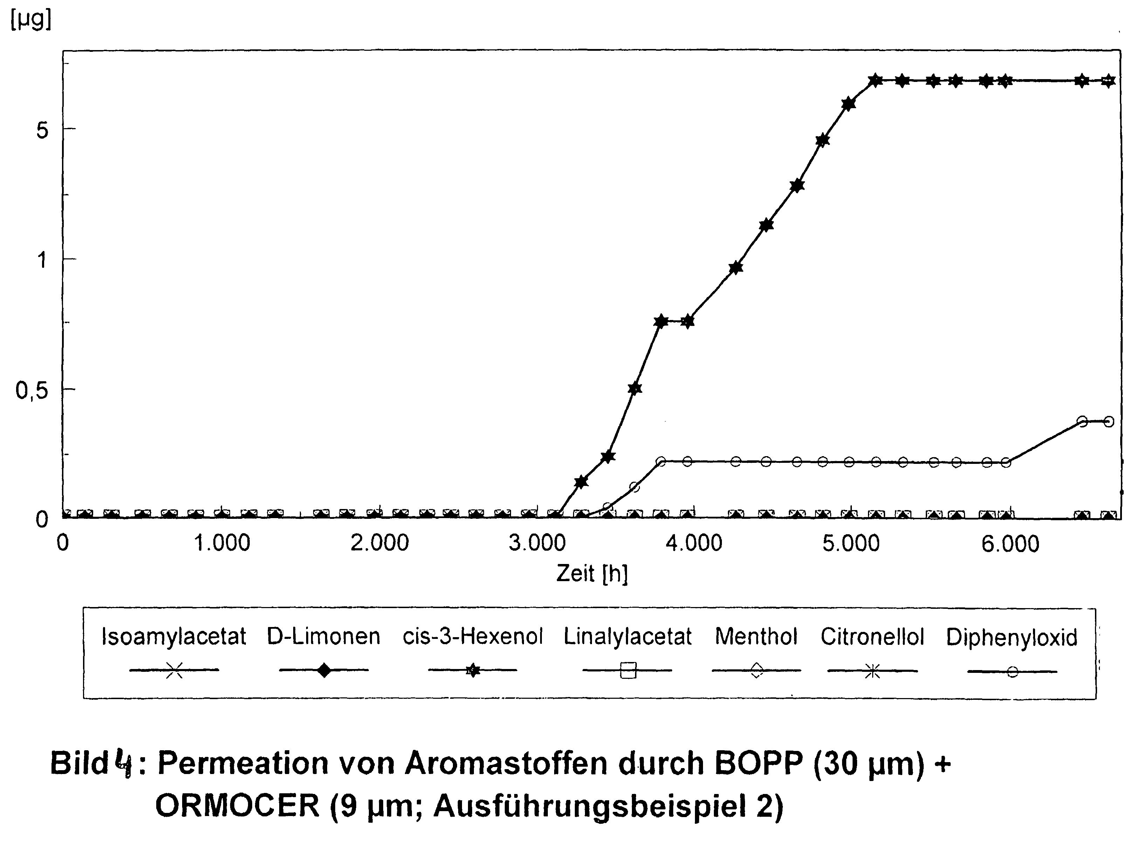

In weiteren Versuchen (nicht erfindungsgemäß) wurde eine BOPP-Folie mit einem Beschichtungslack gemäß dem Ausführungsbeispiel 2 beschichtet und auf Aromastoffpermeation hin untersucht. Bild 4 zeigt diese Ergebnisse. Mit dieser Beschichtungsvariante kann die Permeation nochmals drastisch reduziert werden. Nachweisbar sind nur noch Durchlässigkeiten von cis-3-Hexenol und Diphenyloxid.

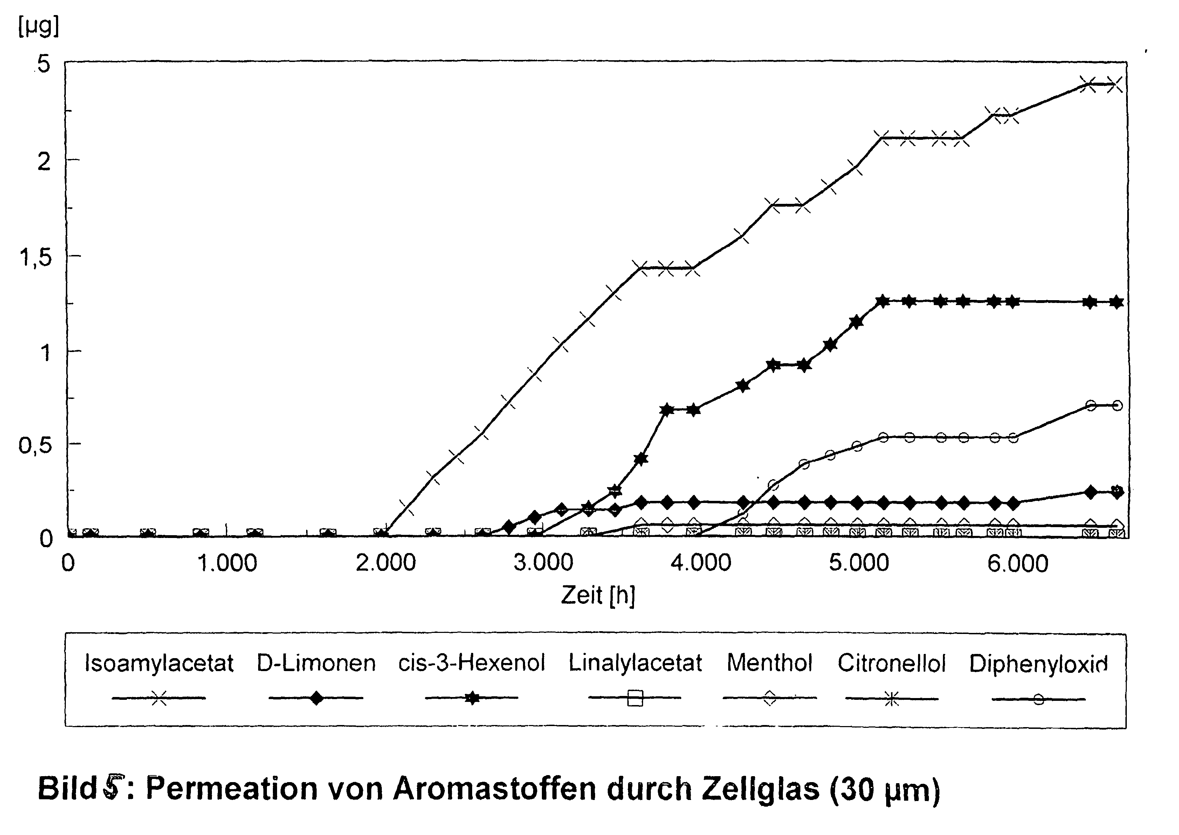

In einem weiteren Versuch (erfindungsgemäß) wird die Permeation der Aromastoffe durch eine Zellglas-Folie (Dicke 30 µm) untersucht. Bild 5 zeigt die Ergebnisse der Permeation durch die unbehandelte Folie, die sich grundlegend von derjenigen durch die unbehandelte BOPP-Folie unterscheidet.

Durch Beschichtung der Zellglas-Folie mit einem Lack gemäß dem Ausführungsbeispiel 1 kann nach einer Meßzeit von ca. 6700 Stunden ausschließlich cis-3-Hexenol mit einer sehr geringen Durchlässigkeit detektiert werden. Für alle anderen Aromastoffe wurde keine Permeation festgestellt.

Die erfindungsgemäßen Beschichtungen zeigen auf den verschiedensten Substraten sehr gute Haftungs- und sehr gute Aromabarriereeigenschaften. Sie weisen sehr gute Beständigkeiten im Feuchteklima auf, so daß die erfindungsgemäßen Barriereschichten auch unter Feuchteeinfluß ihre Funktion behalten. Darüber hinaus sind in dem erfindungsgemaßen Beschichtungsmaterial mehrere Barrierefunktionen, z.B. Sauerstoff- mit Aromabarriereeigenschaften, kombinierbar. Damit steht mit dem erfindungsgemäßen Beschichtungsmaterial mehrfach-funktionales Barrierematerial zur Verfügung, welches durch die herkömmlichen Lack-Applikationstechniken applizierbar ist. Zusatzlich verleiht das erfindungsgemäße Beschichtungsmaterial dem Substrat bzw. der Substratoberflache noch weitere günstige Eigenschaften, wie z.B. mechanische Stobilitat und Abbriebbeständigkeit.

## Patentansprüche

1. Verwendung eines Verbundsystems, bestehend aus einer Aroma- oder einer Riechstoffbarriereschicht aus einem organisch modifizierten Kieselsäurepolykondensat oder einem organisch modifizierten Kieselsäureheteropolykondensat und einem Trägermaterial, das ausgewählt ist aus einem oder mehreren biologisch abbaubaren Polymeren und/oder einem oder mehreren nativen Polymeren, als Verpackungsfolien für Lebensmittel, pharmazeutische oder chemische Produkte.

2. Verwendung nach Anspruch 1, **dadurch gekennzeichnet, dass** das organisch modifizierte Kieselsäure(hetero)polykondensat erhalten worden ist durch hydrolytische Kondensation einer oder mehrerer hydrolytisch kondensierbarer Verbindungen des Siliciums und gegebenenfalls anderer Elemente aus der Gruppe B, Al, P, Sn, Pb, der Übergangsmetalle, der Lanthaniden und der Actiniden, und/oder von den oben genannten Verbindungen abgeleiteten Vorkondensaten, gegebenenfalls in Anwesenheit eines Katalysators und/oder eines Lösungsmittels durch Einwirken von Wasser oder Feuchtigkeit, wobei 10 bis 100 Mol-%, auf der Basis monomerer Verbindungen, der hydrolytisch kondensierbaren Verbindungen Silane der allgemeinen Formel I sind,
SiXₐR₄₋ₐ (I)
in der die Reste und Indices gleich oder verschieden sind und folgende Bedeutung haben:
R = gegebenenfalls substituiertes Alkyl, Alkenyl, Aryl, Alkylaryl oder Arylalkyl mit 1 bis 50 Kohlenstoff-Atomen, wobei diese Reste durch Sauerstoff- oder Schwefel-Atome, durch Urethan-, Ester-, Carbonyl-, Amid- oder Amino-Gruppen unterbrochen sein können;
X = Wasserstoff, Halogen, Hydroxy, Alkoxy, Acyloxy, Alkylcarbonyl, Alkoxycarbonyl oder NR'₂, mit R' = Wasserstoff, Alkyl oder Aryl;
a = 1, 2 oder 3.

3. Verwendung nach Anspruch 2, **dadurch gekennzeichnet, dass** sich die im organisch modifizierten Kieselsäure(hetero)polykondensat gegebenenfalls noch vorhandenen hydrolysierten Silicium-Verbindungen von Silanen der allgemeinen Formel II ableiten,
SiX₄ (II)
in der die Reste X gleich oder verschieden und wie in Anspruch 1 definiert sind.

4. Verwendung nach Anspruch 2 oder 3, **dadurch gekennzeichnet, dass** sich die im organisch modifizierten Kieselsäure(hetero)polykondensat gegebenenfalls noch vorhandenen hydrolysierten Silicium-Verbindungen von Silanen der allgemeinen Formel III ableiten,
SiR₄ (III)
in der die Reste R gleich oder verschieden und wie in Anspruch 1 definiert sind.

5. Verwendung nach einem oder mehreren der Ansprüche 1 bis 4, **dadurch gekennzeichnet, dass** sich die im organisch modifizierten Kieselsäure(hetero)polykondensat gegebenenfalls noch vorhandenen hydrolysierten Aluminium-Verbindungen von Aluminium-Verbindungen der allgemeinen Formel (IV) ableiten,
AlR¹ ₃ (IV)
in der die Reste R¹ gleich oder verschieden sind und Halogen, Hydroxy, Alkoxy oder Acyloxy darstellen.

6. Verwendung nach einem oder mehreren der Ansprüche 2 bis 5, **dadurch gekennzeichnet, dass** sich die im organisch modifizierten Kieselsäure(hetero)polykondensat gegebenenfalls noch vorhandenen hydrolysierten Titan- und/oder Zirkonium-Verbindungen von Verbindungen der allgemeinen Formel V ableiten,
MX_{y}R_{4-y} (V)
in der M Titan oder Zirkonium bedeutet, die Reste X und R gleich oder verschieden und wie im Falle der allgemeinen Formel I definiert sind, und y eine ganze Zahl von 1 bis 4 darstellt.

7. Verwendung nach einem oder mehreren der Ansprüche 2 bis 6, **dadurch gekennzeichnet, dass** das organisch modifizierte Kieselsäure(hetero)polykondensat Zusatzstoffe enthält, die sich von Methacrylsäure und/oder von einem anderen polymerisierbaren Komplexbildner durch Polymerisation und/oder durch Copolymerisation mit einer copolymerisierbaren Komponente ableiten.

8. Verwendung nach einem der mehreren der Ansprüche 2 bis 7, **dadurch gekennzeichnet, dass** das organisch modifizierte Kieselsäure(hetero)polykondensat funktionalisierte SiO₂- und/oder funktionalisierte Al₂O₃-Partikel enthält.

9. Verwendung nach einem oder mehreren der Ansprüche 1 bis 8, **dadurch gekennzeichnet, dass** das organisch modifizierte Kieselsäure(hetero)polykondensat eine Schichtdicke zwischen 1 µm und 50 µm aufweist.

10. Verwendung nach einem oder mehreren der Ansprüche 1 bis 9, **dadurch gekennzeichnet, dass** das Trägermaterial Papier und/oder Pappe und/der beschichtetes Papier und/oder beschichtete Pappe enthält.

11. Verwendung nach einem oder mehreren der Ansprüche 1 bis 10, **dadurch gekennzeichnet, dass** das Trägermaterial eine Folie mit einer Dicke von mindestens 4 µm darstellt.

12. Verwendung nach einem oder mehreren der Ansprüche 1 bis 11, **dadurch gekennzeichnet, dass** das Trägermaterial Verpackungsmaterial darstellt.

13. Verwendung nach einem oder mehreren der Ansprüche 2 bis 12, **dadurch gekennzeichnet, dass** das organisch modifizierte Kieselsäure(hetero)polykondensat Zusatzstoffe enthält.

## Claims

1. Use of a composite, consisting of an aroma or a flavours barrier consisting of an organic modified silicic acid polycondensate or an organic modified silicic acid heteropolycondensate and a substrate material, chosen from one or more biologically degradable polymers and/or one or more native polymers, as a packing foil for foodstuffs, pharmaceutical or chemical products.

2. Use according to Claim 1, **characterised in that** the organic modified silicic acid (hetero)polycondensate is derived by means of hydrolytic condensation of one or more hydrolytic condensable compounds of silicon and possibly other elements from the group B, Al, P, Sn, Pb, the transition metals, the lanthanides, and the actinides, and/or precondensates derived from the above mentioned compounds, possibly in the absence of a catalytic convertor and/or a solvent by means of influence of water or moisture, whereby 10 to 100% moles are based on basic monomer compounds, i.e. the hydrolytically condensable compounds of silane with the general formula I,
SiXₐR₄₋ₐ (I)
in which the groups and indices are the same or different and mean the following:
R = possibly substituted alkyl, alkenyl, aryl, alkylaryl, or arylalkyl with 1 to 50 carbon atoms, whereby these groups can be interrupted by oxygen or sulphur atoms, by urethane, ester, carbonyl, amide or amino groups;
X= hydrogen, halogen, hydroxy, alkoxy, acyloxy, alkylcarbonyl, alkoxycarbonyl, or NR'₂ with R' = hydrogen, alkyl or aryl;
a = 1, 2, or 3.

3. Use according to Claim 2, **characterised in that** the hydrolysed silicon compounds possibly still present in the organic modified silicic acid (hetero)polycondensate are derived from silanes with the general formula II
SiX₄ (II)
in which the groups X are the same or different and are defined as in Claim 1.

4. Use according to Claim 2 or 3, **characterised in that** the hydrolysed silicon compounds possibly still present in the organic modified silicic acid (hetero)polycondensate are derived from silanes with the general formula III
SiR₄ (III)
in which the groups R are the same or different and are defined as in Claim 1.

5. Use according to one or more of the preceding Claims 1 to 4, **characterised in that** the hydrolysed aluminium compounds possibly still present in the organic modified silicic acid (hetero)polycondensate are derived from aluminium compounds with the general formula IV
AlR¹ ₃ (IV)
in which the groups R¹ are the same or different and represent halogen, hydroxy, alkoxy, or acyloxy.

6. Use according to one or more of the preceding Claims 2 to 5, **characterised in that** the hydrolysed titanium and/or zirconium compounds possibly still present in the organic modified silicic acid (hetero)polycondensate are derived from compounds with the general formula V
MX_{y}R_{4-y} (V)
in which M represents titanium or zirconium, the groups X and R are the same or different, and are defined as in the case for the general formula I, and y represents an integer from 1 to 4.

7. Use according to one or more of the preceding Claims 2 to 6, **characterised in that** the organic modified silicic acid (hetero)polycondensate contains additional substances, which are derived from methacrylic acid and/or from another polymerisable complex formed by means of polymerisation and/or co-polymerisation with a copolymerisable component.

8. Use according to one of the preceding Claims 2 to 7, **characterised in that** the organic modified silicic acid (hetero)polycondensate contains functionalised SiO₂ particles and/or functionalised Al₂O₃ particles.

9. Use according to one or more of the preceding Claims 1 to 8, **characterised in that** the organic modified silicic acid (hetero)polycondensate has a layer thickness of between 1µm and 50µm.

10. Use according to one or more of the preceding Claims 1 to 9, **characterised in that** the substrate material contains paper and/or cardboard, and/or coated paper, and/or coated cardboard.

11. Use according to one or more of the preceding Claims 1 to 10, **characterised in that** the substrate material consists of a foil with a thickness of at least 4µm.

12. Use according to one or more of the preceding Claims 1 to 11, **characterised in that** the substrate material consists of packaging material.

13. Use according to one or more of the preceding Claims 2 to 12, **characterised in that** the organic modified silicic acid (hetero)polycondensate contains additional substances.

## Revendications

1. Utilisation d'un système composite, composé d'une couche barrière d'arôme ou de parfum réalisée à partir d'un polycondensat d'acide silicique modifié organiquement ou d'un hétéropolycondensat d'acide silicique modifié organiquement et d'un matériau porteur qui est choisi entre un ou plusieurs polymères biodégradables et/ou un ou plusieurs polymères natifs, comme des feuilles d'emballage pour aliments, pour produits pharmaceutiques ou chimiques.

2. Utilisation selon la revendication 1, **caractérisée en ce que** l'(hétéro)polycondensat d'acide silicique modifié organiquement est obtenu par condensation hydrolytique d'un ou de plusieurs composés, condensables par hydrolyse, du silicium et éventuellement d'autres éléments du groupe B, Al, P, Sn, Pb, des métaux de transition, des lanthanides et des actinides et/ou des précondensats dérivés des composés précités, éventuellement en présence d'un catalyseur et/ou d'un solvant par action de l'eau ou de l'humidité, moyennant quoi 10 à 100 % en moles, sur la base des composés monomères, des composants condensables par hydrolyse, sont des silanes de la formule générale I,
SiXₐR₄₋ₐ (I)
dans laquelle les radicaux et indices sont identiques ou différents et ont la signification suivante :
R = alkyle, alkényle, aryle, alkylaryle ou arylalkyle éventuellement substitués, avec 1 à 50 atomes de carbone, ces radicaux pouvant être interrompus par des atomes d'oxygène ou de soufre, par des groupes uréthanne, ester, carbonyle, amide ou amino ;
X = hydrogène, halogène, hydroxy, alkoxy, acyloxy, alkylcarbonyle, alkoxycarbonyle ou NR'₂, avec R' = hydrogène, alkyle ou aryle ;
a = 1, 2 ou 3.

3. Utilisation selon la revendication 2, **caractérisée en ce que** les composés de silicium hydrolysés, éventuellement encore présents dans l'(hétéro)polycondensat d'acide silicique modifié organiquement, sont dérivés de silanes de formule générale II,
SiX₄ (II)
dans laquelle les radicaux X sont identiques ou différents et sont définis comme à la revendication 1.

4. Utilisation selon la revendication 2 ou 3, **caractérisée en ce que** les composés de silicium hydrolysés, éventuellement encore présents dans l'(hétéro)polycondensat d'acide silicique modifié organiquement, sont dérivés de silanes de formule générale III,
SiR₄ (III)
dans laquelle les radicaux R sont identiques ou différents et sont définis comme à la revendication 1.

5. Utilisation selon une ou plusieurs des revendications 1 ou 4, **caractérisée en ce que** les composés d'aluminium hydrolysés, éventuellement encore présents dans l'(hétéro)polycondensat d'acide silicique modifié organiquement, sont dérivés de composés d'aluminium de formule générale (IV),
AlR¹ ₃ (IV)
dans laquelle les radicaux R¹ sont identiques ou différents, et représentent l'halogène, l'hydroxy, l'alkoxy ou l'acyloxy.

6. Utilisation selon une ou plusieurs des revendications 2 à 5, **caractérisée en ce que** les composés de titane et/ou de zirconium hydrolysés, éventuellement encore présents dans l'(hétéro)polycondensat d'acide silicique modifié organiquement, sont dérivés de composés de la formule générale V,
MX_{y}R_{4-y} (V)
dans laquelle M signifie titane ou zirconium, les radicaux X et R sont identiques ou différents et sont définis par la formule générale I, et y représente un nombre entier de 1 à 4.

7. Utilisation selon une ou plusieurs des revendications 2 à 6, **caractérisée en ce que** l'(hétéro)polycondensat d'acide silicique modifié organiquement contient des adjuvants qui sont dérivés de l'acide méthacrylique et/ou d'un autre agent complexant pouvant être polymérisé par polymérisation et/ou par copolymérisation avec un composant pouvant être copolymérisé.

8. Utilisation selon une ou plusieurs des revendications 2 à 7, **caractérisée en ce que** l'(hétéro)polycondensat d'acide silicique modifié organiquement contient des particules de Si0₂ fonctionnalisées et/ou des particules d'Al₂O₃ fonctionnalisées.

9. Utilisation selon une ou plusieurs des revendications 1 à 8, **caractérisée en ce que** l'(hétéro)polycondensat d'acide silicique modifié organiquement présente une épaisseur de couche comprise entre 1 µm et 50 µm.

10. Utilisation selon une ou plusieurs des revendications 1 à 9, **caractérisée en ce que** le matériau porteur contient du papier et/ou du carton et/ou du papier enduit et/ou du carton enduit.

11. Utilisation selon une ou plusieurs des revendications 1 à 10, **caractérisée en ce que** le matériau porteur constitue une feuille d'une épaisseur d'au moins 4 µm.

12. Utilisation selon une ou plusieurs des revendications 1 à 11, **caractérisée en ce que** le matériau porteur constitue un matériau d'emballage.

13. Utilisation selon une ou plusieurs des revendications 2 à 12, **caractérisée en ce que** l'(hétéro)polycondensat d'acide silicique modifié organiquement contient des adjuvants.
